# EUROPÄISCHE PATENTSCHRIFT

(11) **EP 2 524 874 B1**
(45) Veröffentlichungstag und Bekanntmachung des Hinweises auf die Patenterteilung: **08.07.2015**
(21) Anmeldenummer: 12003634.8
(22) Anmeldetag: 09.05.2012
(51) Int. Cl.: B65B 9/20, B65B 9/22, B65B 23/12, B65B 23/14, B65B 35/44, B65B 35/50, B65B 39/00, B65B 51/30, B29C 65/00, B29C 65/08, B26D 1/00, B26D 1/38, B26D 9/00

(54) **Vorrichtung und Verfahren zum Verpacken von stückigen Produkten**
Method and device for packaging lump products
Dispositif et procédé destinés à l'emballage de produits en pièces

(30) Priorität: 20.05.2011 DE 102011102245; 02.07.2011 DE 102011106352
(43) Veröffentlichungstag der Anmeldung: 21.11.2012
(73) Patentinhaber: Hastamat Verpackungstechnik GmbH, 35633 Lahnau (DE)
(72) Erfinder: Hollmann, Andreas, 76706 Dettenheim (DE); Lökös, Peter, 35457 Lollar-Salzböden (DE); Schmachtel, Markus, 35469 Allendorf-Lumda (DE)
(74) Vertreter: Lempert, Jost

(56) Entgegenhaltungen:
- EP-A1- 0 521 428
- EP-A1- 0 947 453
- EP-B1- 0 912 398
- EP-B1- 1 996 468
- CH-A- 399 992
- DE-A1- 2 118 743
- DE-A1-102005 046 603
- DE-B- 1 045 892
- US-A- 3 391 777
- US-A- 5 566 526
- US-A1- 2006 130 435

## Beschreibung

Die Erfindung betrifft eine Vorrichtung und ein Verfahren zum Verpacken von stückigen Produkten, wie Keksen, in durch Folie gebildeten Schlauchbeuteln.

Stückige Produkte sind Produkte, die als Einzelprodukte gleicher einfacher Form individuell gehandhabt werden müssen, wie quaderförmige, zylindrische Produkte, insbesondere auch mit gleicher Formgestaltung, d.h. größerer Länge und Breite als Höhe. Dies sind damit feste Produkte bzw. Festkörper, nicht aber pastöse, flüssige oder gasförmige Produkte als solche. Diese der Erfindung unterfallenden stückigen Produkte sind weiter definiert als solche mit Längsabmessungen in zwei vorgesehene Richtungen von maximal 30 cm, in der dritten Dimension von maximal 10 cm, einem Volumen von maximal 5 dm³ (5000 cm³) und einer Masse bis zu 1 kg. Diese stückigen Produkte sind leicht handhabbare im Haushalts- oder Bürobereich eingesetzten Gebrauchs- oder Verbrauchsgüter des täglichen Bedarfs.

Als Beispiel solcher Produkte seien kleine Backwaren, insbesondere sogenannte Dauerbackwaren, wie Kekse oder dergleichen genannt. Hierzu gehören aber auch Reinigungspads für Reinigungsmaschinen (Spül- oder Waschmaschinen), Haftnotizen oder dergleichen.

Gattungsgemäße Vorrichtungen oder Schlauchbeutelmaschinen dienen zum Herstellen und Füllen von schlauchartigen Beuteln, welche bisher zur Verpackung von schütt- und rieselfähigen, bzw. frei fließenden Produkten verwendet werden. Schlauchbeutel als Verpackung sind variabel in ihren Einsatzmöglichkeiten insbesondere in ökonomischer Hinsicht, da ein sparsamer Umgang mit dem Verpackungsmaterial gewährleistet ist.

Schlauchbeutelmaschinen sind aus dem Stand der Technik in unterschiedlichen Ausführungen bekannt. Im Allgemeinen werden Schlauchbeutelmaschinen dazu verwendet, aus einem flachen Verpackungsmaterial, insbesondere unter Verwendung einer unter Wärmeeintrag siegelbare Folie aus Kunststoff, einen Beutel zu formen, welcher dann mit einem Füllgut befüllt werden kann. Es sind horizontal und vertikal arbeitende Schlauchbeutelmaschinen bekannt. Eine vertikale Schlauchbeutelmaschine ist beispielsweise in der DE 10 2007 012 862 B3 beschrieben. Bei der Herstellung von solchen Schlauchbeuteln wird eine Folie von Rollen abgezogen, über eine Formschulter um ein Formatrohr geleitet, und in einen Schlauch mit überlappenden Längsrändern umgeformt.

Ein durch Herumlegen oder -führen der Folienränder gebildete Beutelschlauch umschließt dann ein angepasstes Füllrohr, wobei die Querschnittsabmessungen des Füllrohrs auf die Beutelbreite abgestimmt sind. Die sich treffenden bzw. überlappenden Ränder der Folienbahn werden mittels einer Siegeleinrichtung zu einer Längsnaht verbunden und der Schlauch somit längsseitig geschlossen.

Für eine Fertigstellung des Beutels, wird eine erste, den Boden des Schlauchbeutels bildende, Quernaht mittels einer Quersiegeleinheit geschlossen. Eine weitere Naht ergibt den Verschluss des Beutels. Bekannt ist, dass derartige Schlauchbeutel in großen Stückzahlen schnell herstellbar sind, wobei auch mehrere Schlauchbeuteleinheiten nebeneinander verwendbar sind.

Die EP 1 996 468 B1 A1 zeigt eine Vorrichtung und ein Verfahren zum Stapeln einer vorgegebenen Anzahl von Einzelprodukteinheiten, bestehend aus einer speziellen Einzelverpackung für das Produkt und das in dieser Verpackung befindlichen Produkten. Diese Produkteinheiten werden zunächst mit einem Horizontalförderer zugefördert und zwar zu einem intermittierend arbeitenden Vertikaltransporter, der an einem Band in Umlaufrichtung desselben aufeinander folgend eine Vielzahl von Platten aufweist, zwischen denen Fächer gebildet sind, in die die Produkteinheiten durch den Förderer eingeschoben werden. Die Produkteinheiten werden dann von einem Vertikalförderer von dessen linken unteren Ende zunächst nach oben gefördert und dann umgelenkt durch eine Umlenkrolle, bis sie wiederum horizontal gerichtet sind. Dort werden sie seitlich neben den Platten von einer Transfereinheit ergriffen und aus dem Vertikalförderer heraus zu einer Stapelhalterung in Form einer Kassette gefördert. Die Kassette wird in einen leeren Schlauchbeutel eingetaucht und die Produkteinheiten werden anschließend mit einem Stempel in den Beutel hineingedrückt und in den Verpackungsbeutel abgesenkt. Die Stapeleinheit, die die einzeln verpackten Produkteinheiten nur in den flexiblen Randbereichen der Einzelverpackungen hält, und die Gegenhalterung werden schließlich wieder aus dem Schlauchbeutel herausbewegt wird. Die Vorrichtung und das Verfahren sind aufwendig und weisen eine Vielzahl von bewegten Elementen, nämlich Vertikalförderer, Horizontalübergabeeinheit und Stapelhalter auf. Der gesamte Ablauf der Bewegungen ist sehr umständlich und aufgrund der Vielzahl der Teile und der gegebenen Kinematik sehr langsam und kann heutigen Anforderungen in keiner Weise genügen. Auch funktioniert diese Vorrichtung nur mit der dortigen speziellen Einzelverpackung der Produkte nicht aber mit bloßen Produkten. Mit dieser Vorrichtung können keine unverpackten Produkte übernommen und in einen Beutel eingegeben werden, da der die Produkteinheiten aufnehmende und in den Beutel einführende Stapelhalter nicht ohne Beschädigung unverpackter Produkte in ihren Randbereichen wieder aus dem Schlauchbeutel für die Stapelkette entfernt werden könnte. Der Einsatz der Vorrichtung ist daher sehr beschränkt. Schließlich können auch hiermit lediglich die Produkteinheiten mit ihren Flachseiten aufeinanderliegend gestapelt werden, nicht aber mit Schmalseiten oder Umfangswandungen aneinander stoßend. Zur Bildung des Beutels schweigt die Druckschrift sich aus.

Der Erfindung liegt die Aufgabe zugrunde, eine Vorrichtung zu schaffen, die bei einfachem Aufbau, insbesondere Reduzierung beweglicher Teile, es ermöglicht zuverlässig horizontal zugeförderte (bloße) Produkte gestapelt in eine vertikale Einfüllrichtung zu überführen.

Die genannte Aufgabe wird durch eine Vorrichtung zum Verpacken von stückigen Produkten gelöst, die die Merkmale des Anspruchs 1 aufweist. Die Aufgabe wird weiterhin durch ein eingangs genanntes Verfahren mit den Merkmalen des Anspruchs 13 gelöst.

Eine derartige Vorrichtung bzw. Schlauchbeutelmaschine kann mit einer mehrbahnigen Produktführung ausgestattet sein, wobei jede Bahn in vertikaler Förderrichtung folgende Elemente aufweisen kann: wenigstens eine Abzugseinrichtung für ein Verpackungsmaterial zum Formen der Schlauchbeutel; eine der wenigstens einen Abzugseinrichtung zugeordnete Längssiegeleinrichtung zur Siegelung der Längsnaht des Schlauchbeutels; eine Übergabeeinheit, insbesondere als Umlenkeinheit, zum Übergeben bzw. Umlenken von Produkten in die zu bildenden Schlauchbeutel mit einer Stapeleinheit und einer Vorrichtung zum Transport der Produkte in einen Füllbereich; wenigstens eine der Längssiegeleinheit nachgeordnete Seitenfalteinrichtung zur Erzeugung von wenigstens einer Falte in wenigstens einer der Seiten des Schlauchbeutels; eine Quersiegeleinheit zur Erzeugung wenigstens einer Quernaht; und eine Schneideinheit, womit die fertig gestellten Schlauchbeutel voneinander trennbar sind.

Die Komponenten der einzelnen Produktionslinien sind insbesondere mittels Verbindungsmechaniken, wie z.B. Wellen, untereinander verbunden und weitgehend gleichzeitig verwendbar. Für eine parallele Verpackung der Produkte ist insbesondere eine gemeinsame Steuereinrichtung vorgesehen, die einzelne Steuereinrichtungen der einzelnen Komponenten regelt und steuert. So können viele Produktionslinien wie nötig, insbesondere in gerader Anzahl nebeneinander angeordnet und angesteuert werden.

Um eine mehrbahnige Schlauchbeutelmaschine für stückige Produkte, insbesondere Dauerbackwaren, wie Kekse, zu realisieren, sind horizontale Produktführungen in Form endlos laufender Transportbänder vorgesehen. Die Transportbänder können in unterschiedlich langen und/oder breiten Ausgestaltungen vorliegen, wobei mehrere kurze, hintereinander angeordnete Bänder als Separierbänder verwendbar sind, um eine bestimmte Anzahl an Produkten durch unterschiedliche Bandgeschwindigkeiten zusammen- oder auseinander zu führen.

Die Übergabeeinheit der Schlauchbeutelmaschine erfüllt mehrere Aufgaben in einem Arbeitsschritt: Mittels einer Stapeleinheit sind die stückigen Produkte stapelbar und von einer horizontalen Transportrichtung in eine vertikal nach unten gerichtete Transportrichtung führbar. Die Produkte sind mittels der Übergabeeinheit gestapelt einem Füllbereich zuführbar, wobei der Füllbereich den Bereich begrenzt, in welchem ein Schlauchbeutel vorformbar und befüllbar ist. Die Produkte sind in der Übergabeeinheit in Halterungen gehalten.

Die Übergabeeinheit ist zum geführten Übergeben der Produkte ausgebildet. Die Produkte sind in den Verpackungsschlauch und damit in entstehende Schlauchbeutel seitlich des Füllbereiches angeordneten Transportbändern einfüllbar. Hierdurch werden die Produkte kontrolliert in den Verpackungsschlauch abgegeben, sie fallen nicht einfach in diesen hinein.

Die Übergabeeinheit ist als Umlenkeinheit zum geführten Umlenken der Produkte ausgebildet ist, so dass die Produkte stapelbar sind und gestapelt einem Füllbereich zuführbar sind. Verfahrensmäßig ist diesbezüglich vorgesehen, dass die Produkte zum Verteilen in ihrer Ausrichtung umgelenkt werden, vorzugsweise um 90°.

In einer bevorzugten Ausgestaltung ist die erfindungsgemäße Vorrichtung ausgestattet mit einem Produktportionierer zum Separieren von Produkteinheiten aus einer Mehrzahl von Produkten, wobei insbesondere der Produktportionierer an Endlosbändern geführte Übergabefinger zum Aufnehmen jeweils einer Produkteinheit aus mehreren Produkten aufweist. Mittels des Produktportionierers können die Produkte in Produkteinheiten aus einer Mehrzahl von Einzelprodukten separiert werden, wobei insbesondere die Produkteinheiten mittels Endlosbändern geführten Übergabefingern, die jeweils eine Produkteinheit aus mehreren Produkten aufnehmen, separiert werden.

Damit sieht die Erfindung zunächst vor, dass horizontal zugeförderte Produkte, deren Abstand gegebenenfalls bei der horizontalen Zuförderung durch hintereinander angeordnete Förderbänder mit unterschiedlicher Geschwindigkeit verändert, insbesondere vergrößert wird, mit ihrer horizontalen Ausrichtung (größte Flächen des dreidimensionalen Produktkörpers horizontal gerichtet bzw. mit vertikaler Flächennormale), mit dieser Ausrichtung zur in vertikaler Richtung erfolgenden Weiterverarbeitung übergeben werden und dabei in dieser Ausrichtung zu einer Produkteinheit aus mehreren in den vertikalen Vorfördereinrichtungen übereinanderliegenden Produkten zusammengeführt werden, wobei derartige Produkteinheiten aus mehreren Einzelprodukten voneinander separiert werden, so dass sie im Folgenden separat verpackt werden können (Slug-Pack).

In einer alternativen Ausgestaltung werden die Produkte zunächst beim horizontalen Zufördern gestapelt, beispielsweise mit Stapeln von ein oder zwei Produkten, derartige Stapel zu Produkteinheiten zusammengeführt werden, die demgemäß mehrere Produkte enthalten. Die Produktstapel einer Produkteinheit stehen dabei näher zueinander als zu dem benachbarten Stapel einer anderen Produkteinheit. Bei einer derartigen Zusammenführung von Produkten zu Stapeln werden diese zur vertikalen Weiterverarbeitung, insbesondere zum Verpacken in Schlauchbeuteln, nicht mit gleicher Ausrichtung übergeben, sondern umgelenkt, in der Regel um 90°, so dass mehrere nebeneinander angeordnete Produktstapel als Produkteinheit zusammen verpackt werden können und zwar als sogenanntes Pile-Pack.

Es ist vorgesehen, dass eine Umlenkeinheit eine Stapeleinheit aufweist. Der Stapeleinheit ist dabei eine Stapelkette zugeordnet, die vertikal nach außen ausgebildete U-förmige Halterungen besitzt, wobei die Produkte von einem Ablageband in die Halterungen mittels von Ablegekeilen führbar sind. Die Stapelkette ist ein Endlosband und weist eine dem Füllbereich zugewandte Rechteckform mit abgerundeten Ecken und eine dem Ablageband zugewandte Ellipsenform auf. Die Halterungen können als L-förmige Wände ausgebildet sein, wobei parallel zur Stapelkette angeordnete Teile der L-förmigen Wände paarweise zueinander gerichtet sind, so dass U-förmige Halterungen für die Produkte ausgebildet sind. Die Abstände der Wände zueinander sind den Abmessungen der Produkte angepasst.

Um eine flexible Anpassung an unterschiedlich geformte bzw. bemessene Produkte zu erhalten, kann vorgesehen sein, dass die Kette zweiteilig ausgestaltet ist, wobei eine erste L-förmige Wand auf einer ersten Kette und eine zweite L-förmige Wand auf einer zweiten Kette entgegengesetzt zur ersten L-förmigen Wand angeordnet ist. Die erste und die zweite Kette können nun zueinander derart verschiebbar sein, dass die Abstände der Wände zueinander dem Maß des Produkts entsprechen. Die Wände bestehen insbesondere aus Metall und/oder Kunststoff.

Die Produkte der Stapeleinheit zuführende Förderbänder sind derart steuerbar, dass eine paarweise Anordnung der Produkte auf dem Ablageband gewährleistet ist. Das Ablageband ist der Stapelkette vorgeordnet, wobei die neben der Kette angeordneten Ablegekeile direkt unterhalb an das Ende des Ablagebandes anschließen und Produkte über diese Ablegekeile führbar sind, wobei die Produkte mittels der weiterführenden Bewegung der Kette zwischen den Wänden als Halterungen mitnehmbar und festhaltbar sind. Ein Ablegen der Produkte auf diese Ablegekeile bewirkt eine geringe, gleichbleibende Fallhöhe für die Produkte.

Die Umlenkeinheit der Erfindung weist wenigstens eine Haltestange oberhalb der Stapelkette auf, die ein Herausfallen der Produkte aus der Halterung zwischen den Wänden verhindert. Die gestapelten Produkte werden mittels der Stapelkette in einer Umlenkbewegung von einer horizontalen in eine vertikale Lage geführt. Um die in den Halterungen gehaltenen Produkten einfach und schonend dem weiteren Füllbereich zuzuführen, sieht die Erfindung insbesondere vor, dass dem vertikalen Teil der Stapelkette eine Seitenführung zugeordnet ist, die aus vor der Stapelkette angeordneten Seitenblechen und Führungskeilen aufgebaut ist. Die Seitenbleche weisen eine der Bahn nachempfundene Form auf, wobei eine Breite der gebogenen Bahn derart bemessen ist, dass die Kette mit den Wänden ohne Weiteres weiterlaufen kann. Hierbei wird ein Herausnehmen der Produkte aus ihrer Halterung durch Herausschieben mittels der stationären Seitenbleche bewirkt.

Die Umlenkeinheit weist weiterhin einen Produktportionierer auf, um einzelne Produkte bzw. eine bestimmte Anzahl an Produkten dem Füllbereich zuzuführen. Der Produktportionierer weist einen bandförmigen Mittelkörper mit wenigstens einem, vorzugsweise vier Übergabefingern auf, die zur Produktportionierung senkrecht zur Laufrichtung des Produktportionierers angeordnet sind. Der Produktportionierer selbst kann aus einem bzw. zwei separat laufenden Riemen bestehen, die mittels zweier Wellen separat antreibbar sind. Auf jeweils einem Riemen können wenigstens ein, vorzugsweise zwei Übergabefinger an einander gegenüberstehenden Bereichen des Riemens angeordnet sein. Beim Ausschieben der Produkte aus der Stapelkette sind die Produktstapel mittels dieser Übergabefinger teilbar bzw. auffangbar und ohne Beschädigungen dem Füllbereich zuführbar.

Die Erfindung sieht weiterhin zur optimalen Folienzuführung bevorzugt vor, dass eine erste Abzugseinrichtung eine Doppelwalze und eine zweite Abzugseinrichtung eine Formschulter mit Formrohr, ein Formelement und/oder eine Abzugsrolle aufweist. Eine Folie ist von einer Folienrolle als Vorrat abziehbar, wobei mittels einer doppelten Folienführung die Folie in einer S-Form abziehbar ist. Dies gewährleistet einen faltenfreien Abzug der Folie von der Rolle. Um eine gerade Abziehrichtung einzuhalten, ist vorgesehen, dass die Folie mittels einer Doppelwalze unter Spannung haltbar sowie in der jeweiligen Geschwindigkeit abziehbar ist. Die Rollen sind vorzugsweise mit Gummi beschichtet, um eine gute Haftung an der Folie zu haben und diese mit so wenig Beschädigung wie möglich aus dem Folienvorrat abzuziehen. Sollte eine schlechte Qualität der Filmrolle zu erwarten sein, kann eine Kontrolle der Folienränder vorgesehen sein, wobei die Anordnung der Komponenten der ersten Abzugseinrichtung in ihren Abständen bewegbar ist, wodurch ein Versatz der Folie ausgleichbar ist. Der Doppelwalze nachgeordnet ist eine Schneideeinheit vorgesehen, welche rotierende Schneidemesser aufweist, wobei die Folie in einzelne Folienbahnen schneidbar ist, deren Breite dem späteren Umfang der Schlauchbeutel entspricht. Derartige Trennmesser sind zunächst als separate Funktion mit einem rotierenden Messersystem ausgelegt. Die Trennung kann aber auch mit Messern in einem Messerschlitz der Siegelwerkzeuge erfolgen.

Bevorzugt können auf der Schlauchbeutelmaschine Produkte sowohl einlagig als auch zweilagig (d.h. zwei Produkte aufeinandergestapelt) verpackt werden können. Hieraus ergeben sich unabhängig von der Anzahl jedoch grundsätzlich zwei unterschiedliche Folienbreiten, was bei mehrbahnigen Schlauchbeutelmaschinen üblicherweise zu unterschiedlichen Mittelabständen der Füllbereiche zueinander führt. Um dies zu umgehen, kann eine Bahnspreizung mittels einer Spreizeinheit vorgesehen sein. Die Maschine selbst ist für das größte Folienformat ausgelegt. In diesem Fall laufen nach der Trennung der Folienbahnen mit rotierenden und/oder Stechmessern alle Folienbahnen geradeaus weiter. Wird auf eine einlagige Verpackung umgestellt, wird eine schmälere Rolle verwendet, wobei die nach der ersten Trennung resultierenden zwei Bahnen spreizbar sind, so dass nach einer weiteren Teiltrennung mit jeweils zwei Trennmessern für jede Bahn die nun entstandenen mittlere Folienbahnen eine gerade Laufrichtung vorgesehen sein kann, und die beiden benachbarten Bahnen mittels von Schwenkrahmen in die richtige Einlaufposition zum Füllbereich spreizbar sind.

Die zweite Abzugseinrichtung kann ein Formelement und/oder eine Abzugsrolle aufweisen, wobei Verpackungsmaterial, insbesondere eine Folie, von einer Folienrolle mittels einer Abzugswalze und der Abzugseinrichtung abziehbar ist, und dass die Folie mittels der zweiten Abzugseinrichtung in einen Folienschlauch mit rechteckiger und/oder runder Querschnittsform formbar ist. Bevorzugt kann vorgesehen sein, dass eine zweite

Abzugseinrichtung eine Formschulter mit Formrohr aufweist. Die Formschulter ist dabei ein Formteil, das aus der Richtung, aus der die die Beutel bildende flache Folienbahn zugeführt wird, die eine beidseitig um ein Füllrohr herumgeführte und dessen Mantelkontur folgende obere Kante aufweist, deren Höhe sich zu der der Zuführseite abgewandten Seite der Formschulter schräg verlaufend vermindert, wobei schließlich die auf dieser Gegenseite liegenden vertikalen Kanten des Formteils sich in Umfangrichtung treffen oder zumindest überlappen. Ein Folienrand ist zwischen dem Füllrohr oder einem dieses noch umgebenden Hüllrohr und der vertikalen inneren Kante des Schulterformteils, der andere Folienrand daneben führbar. Als Höhe des Formteils wird die Höhe bezeichnet, ab der sich die beiden Seiten der Kanten des Schulterformteils annähern.

Für einen im Querschnitt rechteckig geformten Schlauchbeutel ist weiterhin vorgesehen, dass ein Formelement für den Schlauchbeutel insbesondere eine rechteckige Form und einen in Längsrichtung ausgebildeten Schlitz aufweist, in welchen die Folienränder führbar sind. Das Formelement kann jedoch zur Ausbildung der Schlauchbeutelform auch einen anderen Querschnitt, wie z.B. einen runden Querschnitt, aufweisen. Zur Weiterführung der Folie ist innerhalb der zweiten Abzugseinrichtung insbesondere vorgesehen, dass rückwärtig des Formelements in diesem eine Ausnehmung ausgebildet ist, in welcher wenigstens eine Abzugsrolle angeordnet ist, womit die Folie gleichmäßig weiterführbar ist. Die Abzugsrollen der Produktionslinien können mittels einer Welle verbunden sein, welche über eine Steuereinrichtung steuerbar ist.

Ein Formelement ist am unteren Ende der Formschulter angeordnet, wobei die Folie in Förderrichtung um das Formelement ziehbar ist. Für eine gute Folienführung und zum einfachen Befüllen ist einer der Formschulter zugewandten Stirnseite des Formelements eine leicht nach außen gebogene Lasche vorgesehen. Die Lasche kann Teil einer Fortführung der Formschulter sein. Um eine korrekte Folienform zu erreichen, kann vorgesehen sein, dass das Formelement zu beiden Längsseiten offen ist bzw. längliche Zwischenräume aufweist, und dass das Formelement aus mehreren Teilen besteht, die ineinander angeordnet sind, so dass die Folie zwischen den Teilen führbar ist.

In einer bevorzugten alternativen Ausgestaltung sieht die Erfindung vor, dass anstelle eines Formelements eine Falteinrichtung verwendbar ist. Die Folie ist über eine Formschulter abziehbar und es kann rückwärtig unterhalb der Formschulter ein Folienabzug mittels eines Abzugsriemens vorgesehen sein, der die Folie hinter den gummierten Antriebswalzen stramm zieht. An der Vorderseite des Füllbereichs befinden sich zwei rotierende Siegelbänder einer Längssiegeleinrichtung. Zwischen diesen Siegelbändern ist die aufgerichtete Finne des Beutels durchführbar und eine Längsnaht, hier eine Umlegenaht, ist siegelbar. Um hier Schlupfeffekte, d.h. Störungen in der Folienzuführung durch ungleichmäßigen Schlupf zwischen den Bahnen und unterschiedlichen Folientransporten, zu vermeiden, läuft der Antrieb dieses Abzugsriemens mit einer um ca. 15 bis 20% höheren Geschwindigkeit wie die Folie selbst, wobei die Rotation mit einem elastischen Element, z.B. einer mechanischen Feder auf den Riemen übertragbar ist. Bevorzugt kann ein Vakuumriemen verwendet werden, wodurch auf ein Gegenlager, d.h. ein Formelement, als solches vollständig verzichtet werden kann. Besonders vorteilhaft am Verzicht eines Formelements ist, dass - wie bei horizontalen Verpackungsmaschinen - die Folie um das Produkt herum eingeschlagen werden kann, was zu einem sehr kompakten Beutel bei minimalem Folieneinsatz führt.

Damit eine bestimmte Anzahl an Produkten ohne Beschädigungen in die Schlauchbeutel befüllbar sind, kann vorgesehen sein, dass links und rechts der jeweiligen Längsseiten unterhalb der Formschulter wenigstens ein Transportband nebengeordnet ist, welches zur schonenden Einfüllung der Produkte dient. Insbesondere zwei Transportbänder pro Bahn weisen die Form von endlosen Raupenbändern auf, wobei sie eine weiche Oberfläche insbesondere aus Kunststoff besitzen. Die weiche Oberfläche besteht zumeist aus einem Schaumstoff oder schwammartigem Gummi. Die Transportbänder können jeweils aus zwei parallel zueinander geführten Bändern zusammengesetzt sind, damit einerseits die doppelt gestapelten Kekse leichter einführbar sind und auch eine Seitenfalteinrichtung verwendbar ist, die aufgrund einer kompakten Anordnung der einzelnen Komponenten in die Lücke zwischen den Transportbändern eingreifen kann. Die Transportbänder sind mittels einer Feder vorspannbar, wobei die Federkraft in Richtung der Folie und somit in Richtung der Produkte zeigt. Aufgrund von Reibung sind die Produkte von beiden Seiten während des Einfüllens gehalten und im Abzugsprozess der Folie in den halbfertigen Schlauchbeutel leitbar.

In bevorzugter Ausgestaltung sind die Merkmale des Anspruchs 10 vorgesehen.

Der Längssiegeleinrichtung ist insbesondere eine Steuerelektronik zugeordnet. Weiterhin ist vorgesehen, dass die Längssiegeleinheit Blasdüsen zur Kühlung der Siegelnaht aufweist, womit die Dichtigkeit der Siegelnaht noch zusätzlich erhöht werden kann. Andere Methoden der Längsnahtsiegelung, z.B. Heißsiegelung oder Heißluftsiegelverfahren sind ebenfalls möglich. Bei einer Heißsiegeleinrichtung sind zwei gegeneinander gelegte Siegelbänder vor dem Füllbereich angeordnet.

Die Erfindung sieht für ein Falten der Schlauchbeutelseiten nach innen insbesondere vor, dass die Seitenfalteinrichtung zur Einfaltung der Seiten des Schlauchbeutels Faltelemente aufweist, die über zwei seitlich zum Folienschlauch parallel zueinander angeordneten Wellen gegen- und/oder gleichsinnig in die Seiten des Folienschlauchs eingreifbar sind, wobei ein Faltelement jeweils wenigstens einen Nocken aufweist, dessen Abmessung der Tiefe des Seitenfalzes im Folienschlauch entspricht. Es ist weiterhin vorgesehen, dass die Seitenfalteinrichtung zum Einfalten der Seiten des Schlauchbeutels der Quersiegeleinheit vorgeordnet und/oder nachgeordnet ist. Eine Versiegelung der Seitenfalte kann weiterhin dadurch sichergestellt sein, dass die Seitenfalteinrichtung mit dem Querbackenantrieb in vertikale Bewegungsrichtung mitführbar ist. Diese Anordnung erlaubt eine äußerst exakte Seitenfaltung und Siegelung der gefalteten Folie, wobei insbesondere ein Knittern in der Naht verhindert wird.

In bevorzugter Ausgestaltung sind die Merkmale des Anspruchs 12 vorgesehen.

Der Quersiegeleinrichtung kann eine Steuerelektronik zugeordnet sein. Die Erfindung sieht weiterhin vor, dass eine Quersiegeleinheit als Heißsiegeleinheit ausgebildet sein kann, mit wenigstens zwei gegenläufig zueinander mittels jeweils einer Welle rotierbaren Siegelkörpern, die jeweils wenigstens zwei, insbesondere drei Siegelbacken aufweisen, die gegeneinander drückbar sind. Die Siegelbacken können zum Siegeln einer Doppelnaht eine quer verlaufende Nut aufweisen und/oder je nach gewünschter Naht entsprechend ausgebildet sein.

Der Bereich zwischen einer Doppelnaht ist dazu verwendbar, den fertigen Schlauchbeutel von einem halbfertigen zu trennen. Wodurch grundsätzlich, insbesondere bei niedrigen Ausbringleistungen, die Beuteltrennung mit einem Stechmesser in den Quersiegelwerkzeugen erfolgen kann, ist besonders vorgesehen, dass eine Schneideeinheit eine Welle aufweist, an welcher ein Messer befestigt ist. Dieses ist mittels einer Steuereinheit entlang seiner Längsachse mittels der Welle rotierbar, und weist eine Schneide auf, welche während der Rotation der Welle auf ein Gegenstück trifft, wodurch die Schlauchbeutel voneinander trennbar sind. Schneide und Gegenstück wirken hierbei wie eine Schere, was einen sauberen Schnitt zwischen zwei Beuteln gewährleistet.

Das erfindungsgemäße Verfahren sieht vor, dass eine Vielzahl an Produkten mittels Förderbändern der Anlage zugeführt werden. Die Umlenkeinheit stapelt die Produkte und führt sie gestapelt einem Füllbereich in kontrollierter Weise zu. Die Produkte können auf kurze hintereinander angeordnete Separierbänder gelangen, deren Geschwindigkeiten derart geregelt sein können, dass die Produkte einzeln oder paarweise einem Ablageband übergeben werden oder äquivalent angeordnet der Anlage zugeführt werden. Von den Zuführbändern werden die Produkte der Umlenkeinheit zugeführt, die eine Stapeleinheit aufweist, die die Produkte zu Stapeln von wenigstens zwei übereinander gelegten Produkten stapelt. Es ist dann vorgesehen, dass die gestapelten Produkte mittels der Umlenkeinheit von einer horizontalen in eine vertikale Transportrichtung geführt werden. Danach werden die Produkte in den Füllbereich transportiert, in welchem die Produkte mittels von seitlich des Füllbereichs angeordneten Transportbändern in die entstehenden Schlauchbeutel transportiert werden. Gleichzeitig wird eine Folie durch die erste Abzugseinheit von der Folienrolle abgezogen und mittels der zweiten Abzugseinheit in einen Schlauch geformt. Die vor dem Füllbereich angeordnete Längssiegeleinheit siegelt kontinuierlich eine Längsnaht. Unterhalb des Füllbereichs sorgt eine Seitenfalteinrichtung dafür, dass zu jeder Seite des Folienschlauchs eine seitliche Falte eingedrückt wird. Hiernach findet eine Quersiegelung mittels der Quersiegeleinheit statt. Die Schneideinheit trennt in einem letzten Schritt die fertigen Schlauchbeutel ab.

Durch die vorliegende Erfindung wird eine Schlauchbeutelmaschine zur Verpackung stückiger Produkte geschaffen, bei der die stückigen Produkte zunächst horizontal zugefördert werden und anschließend vertikal den am Ort hergestellten Schlauchbeuteln zugeführt werden - im Gegensatz zur EP 1 996 668 B1, bei der die zugeführten horizontal ausgerichteten ein Produkt enthaltenden Beutel mit gleicher Ausrichtung vertikal gestapelt werden. Es wird so eine mehrbahnige Schlauchbeutelmaschine für Flach- und Seitenfaltbeutel in platzsparender Weise bereitgestellt. Besonders vorteilhaft sind die durch die Umlenkeinheit vorgenommene Stapelung der Produkte sowie deren Übergabe zu den weiteren Füllkomponenten, die durch ihre kompakte Anordnung eine Minimierung der Fallhöhe der Produkte in die entstehenden Schlauchbeutel beinhaltet. Eine korrekte Faltung des Seitenfalzes ist besonders durch den erfindungsgemäßen Aufbau der Faltelemente gegeben, wobei die Tiefe des Falzes durch einfache Anpassung der Faltelemente geändert werden kann. Auch die Trennung der fertigen Schlauchbeutel untereinander ist durch das rotierende Messer präziser als bisher verwendete Messer und ergibt saubere Schneidkanten.

Durch die Anordnung der Komponenten in vertikaler Weise und der Verwendung mehrerer parallel laufender Produktionslinien, ist eine schnellere Verpackung der Füllgüter möglich. Besonders vorteilhaft ist, dass somit verschiedene Einfüllmuster von Produkten, wie z.B. 1x2, 2x2, 3x2, 4x2 vorsehbar sind, einfach durch Verändern der Taktraten. Diese Art der Synchronisierung erlaubt es unterschiedliche Verpackungsmuster zu generieren und zur gleichen Zeit eine geeignete Lücke zwischen den Produkten zu erhalten, um eine Quersiegelung vorzunehmen. Aufgrund der kontinuierlichen Arbeitsweise, einer im Vergleich zu anderen Maschinen deutlich verkleinerten Fallhöhe und damit verbundener kompakter Bauweise ist eine Leistung von bis zu 400 - 500 Produkte pro Minute möglich.

Bevorzugt sieht die Erfindung die Verarbeitung stückiger Produkte mit Längsabmessungen in zwei Dimensionen von höchstens 20 cm, in der dritten Dimension von höchstens 5 cm damit einem Volumen von höchstens 2 dm³ (2000 cm³) und in Gewicht von höchstens 0,5 kg vor.

Weitere Vorteile und Merkmale ergeben sich aus den Ansprüchen und aus der nachfolgenden Beschreibung, in der ein Ausführungsbeispiel der Erfindung unter Bezugnahme auf die Zeichnung im Einzelnen erläutert ist. Hierbei zeigt:
- Fig. 1: eine erste Perspektivansicht von Komponenten, einer Schlauchbeutelmaschine insbesondere der Folienzuführung schräg oben;
- Fig. 2: eine zweite Perspektivansicht der Schlauchbeutelmaschine gemäß Fig. 1 von schräg unten;
- Fig. 3: eine Seitenansicht der Schlauchbeutelmaschine gemäß Fig. 1 und 2;
- Fig. 4: eine Detailansicht einer Schlauchbeutel bildenden Produktionslinie mit Längs- und Quersiegeleinheit der Schlauchbeutelmaschine;
- Fig. 5: eine detaillierte Ansicht auf die Ausgestaltung einer Seitenfalteinrichtung;
- Fig. 6: eine Detailansicht einer Schneideinheit;
- Fig. 7: eine perspektivische Ansicht auf eine bevorzugte Ausgestaltung einer erfindungsgemäßen Schlauchbeutelmaschine;
- Fig. 8: eine seitliche Ansicht der erfindungsgemäßen Schlauchbeutelmaschine nach Fig. 7;
- Fig. 9: eine Detailansicht auf eine Produktführung und eine Stapeleinheit gemäß der Ausgestaltung der Fig. 7 und 8;
- Fig. 10: eine schematische Ansicht einer Folienzuführung;
- Fig. 11: eine detaillierte Darstellung der Folienzuführung der Fig. 10;
- Fig. 12: eine Darstellung einer Ausgestaltung zum Ausheben oder Austakten der Produkte aus der Stapelkette;
- Fig. 13: einen Produktportionierer im Rahmen der erfindungsgemäßen Vorrichtung;
- Fig. 14: eine Detailansicht auf einen unteren Teil der Produktionslinie gemäß der bevorzugten Ausgestaltung;
- Fig. 15: eine perspektivische Ansicht einer Vorrichtung zum Verpacken stückiger Produkte oder Schlauchbeutelmaschine;
- Fig. 16: eine perspektivische Ansicht im Wesentlichen entgegen der horizontalen Förderrichtung auf eine Übergabeeinheit zum Übergeben der Produkte von der horizontalen zur vertikalen Förderrichtung; und
- Fig. 17: eine perspektivische Ansicht im Wesentlichen aus der horizontalen Förderrichtung auf eine Übergabeeinheit zum Übergeben der Produkte von der horizontalen zur vertikalen Förderrichtung.

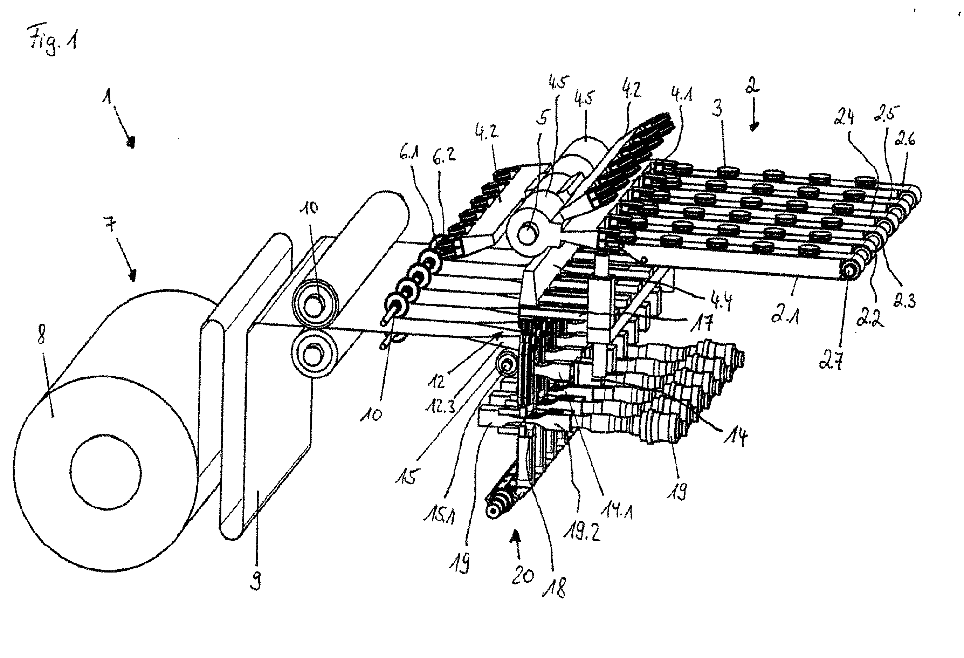

Die Fig. 1 zeigt wesentliche Komponenten einer Schlauchbeutelmaschine 1 in einer perspektivischen Ansicht.

Die horizontalen Produktführungen weisen entlang ihrer Ausdehnung auf Förderbändern verlaufende Bänder und Weichen auf, wodurch Produkte von wenigstens zwei auf mindestens sechs Führungen verzweigbar sind. Die Weichen und Banden werden hierbei derart platziert, dass eine gleichmäßige Verteilung der Produkte auf die Produktslinien gewährleistet ist.

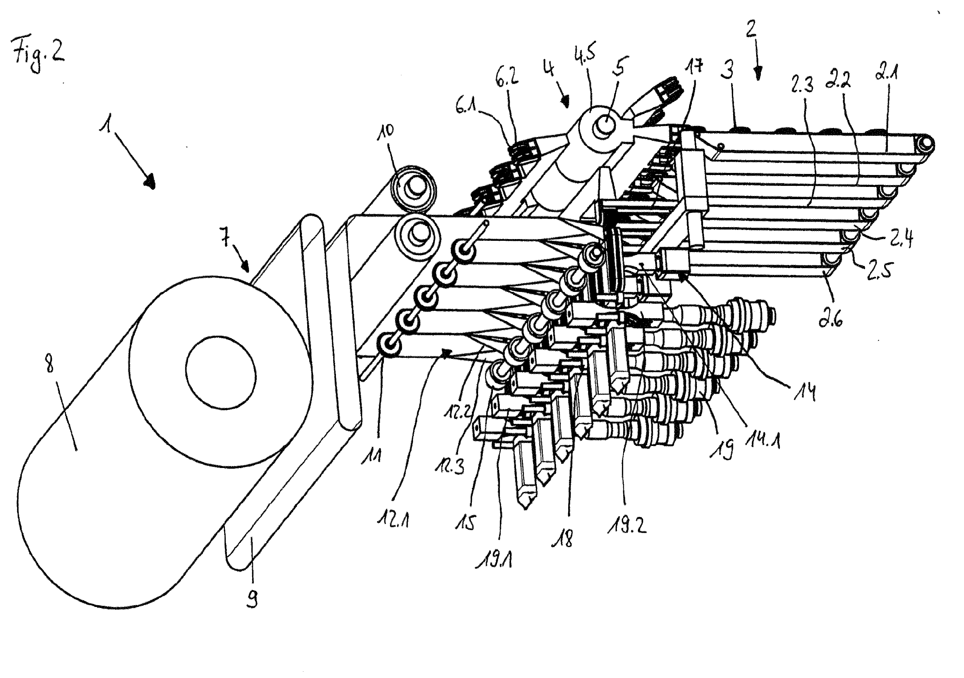

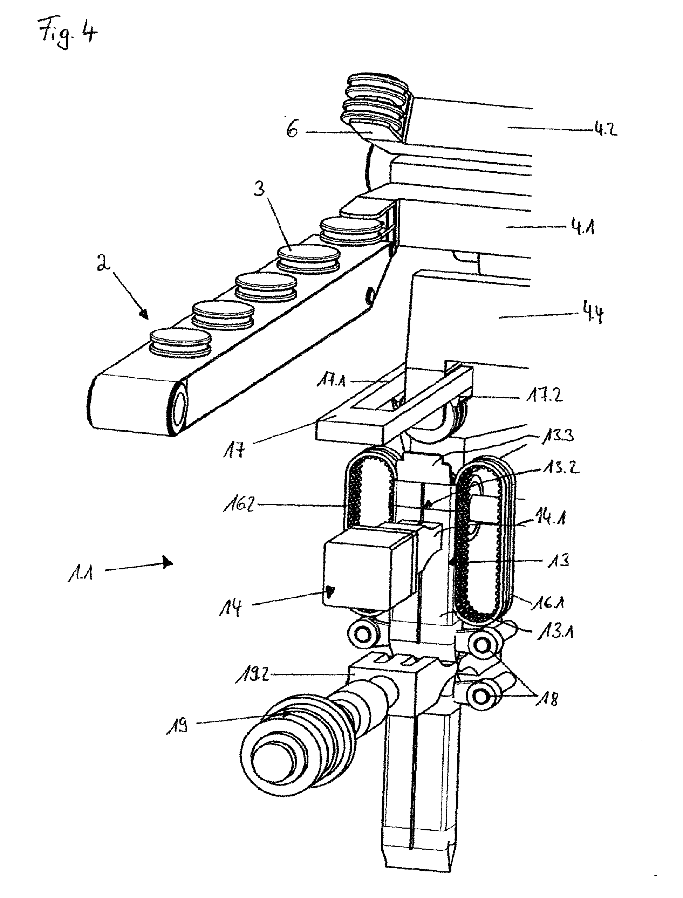

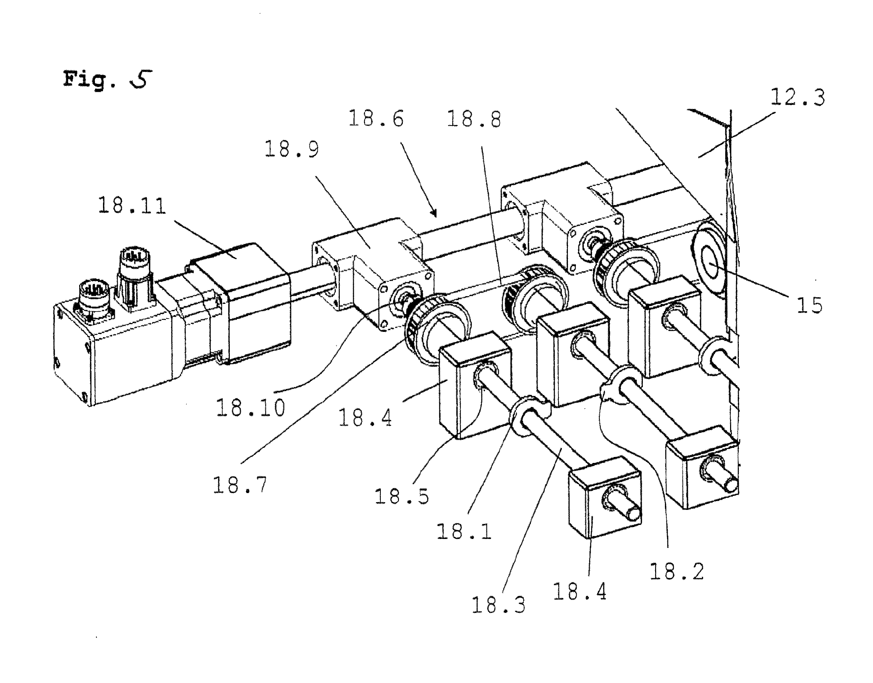

Die Maschine 1 weist Produktführungen 2 in Form von Förderbändern 2.1 bis 2.6 mit Antriebsmitteln 2.7 auf, die stückige Produkte, vorzugsweise flachzylindrische Produkte 3, insbesondere Kekse 3, mittels mehrerer Stapeleinheiten 4 oder zumindest wenigstens einer Stapeleinheit weiteren Verarbeitungs- bzw. Verpackungskomponenten zuführen. Die Verpackungskomponenten bilden in vertikaler Richtung mit den Produktführungen 2 und der Stapeleinheit 4 (Fig. 2-4) eine Produktionslinie 1.1 (Fig. 4). In einer Schlauchbeutelmaschine 1 kann eine beliebige Anzahl an Produktionslinien nebeneinander angeordnet sein. Die Produktionslinie 1.1 und deren Komponenten sind insbesondere in den Fig. 1 bis 3 in einer Übersicht dargestellt. In Fig. 5 ist eine Produktionslinie 1.1 in einer Einzeldarstellung ohne Folienzuführung gezeigt.

Die Produktführungen 2 (insb. Fig. 1-3) sind in Form von endlos laufenden Förderbändern 2.1 bis 2.6 ausgebildet, die aus (metallenem) Blech bzw. aus Kunststoff bestehen, wobei die Förderbänder 2.1 bis 2.6 eine gummierte Lauffläche aufweisen. In dieser Ausgestaltung sind sechs Förderbänder 24.1 als Produktführungen 2 vorgesehen, es sind jedoch auch ohne Weiteres mehr oder weniger Förderbänder verwendbar. Die weiteren Verpackungskomponenten bzw. Komponenten der Maschine 1 sind am Förderende A der Förderbänder 24.1 senkrecht zu diesen angeordnet, wobei die Produkte 3 zunächst mittels einer Stapeleinheit 4 stapelbar sind und als Stapel umlenkbar sind. Die Stapeleinheit 4 bildet mit den Förderbändern und weiteren Komponenten eines Füllbereichs E eine Umlenkeinheit 1.2, die der Überführung der Produkte 3 in nach und nach geformte Schlauchbeutel dient.

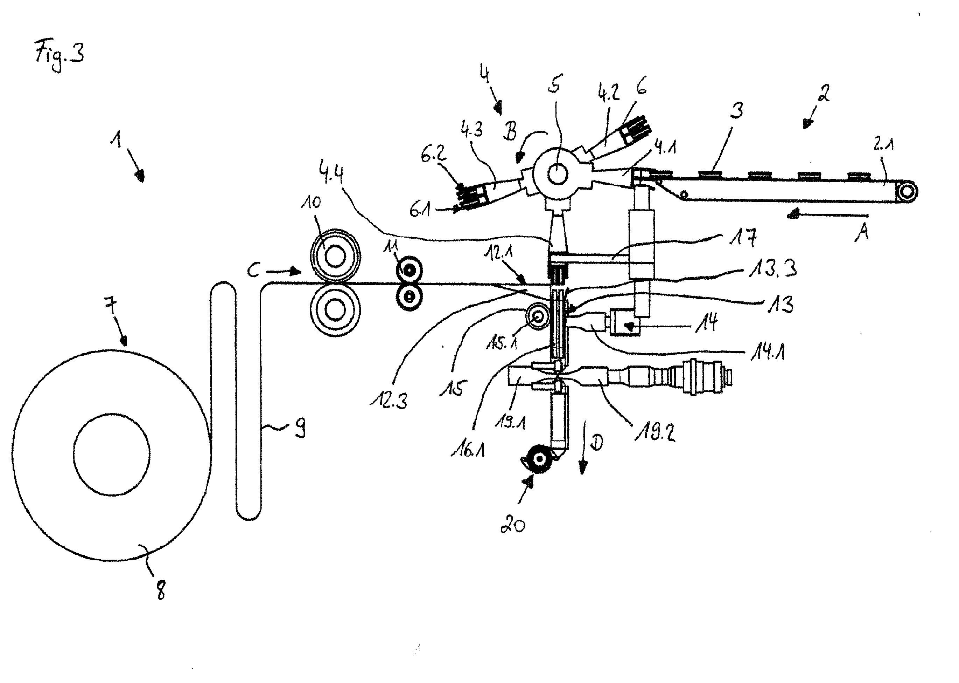

Der Stapeleinheit 4 nebengeordnet ist insbesondere eine erste Abzugseinheit 7 (Fig. 1-3), die neben einem Folienantrieb (nicht dargestellt) eine Folienrolle 8 mit einer Folie 9, Umlenkrollen (nicht dargestellt) und eine Doppelwalze 10 aufweist. Über die Umlenkrollen ist die Folie 9 in einer Abzugsrichtung C (siehe Pfeil in Fig. 3) in Verbindung mit der gummierten Doppelwalze 10 unter einer gewissen Spannung haltbar und nahezu faltenfrei von der Folienrolle 8 abziehbar. Der Doppelwalze 10 in Abzugsrichtung C nachgeordnet ist eine Achse mit rotierenden Schneidmessern 11, die zur Unterteilung der Folie 9 in schmälere Folienbahnen 9.1 ausgebildet sind.

Die Folie 9 bzw. eine einzelne Folienbahn 9.1 ist mittels jeweils einer jeder Produktionslinie 1.1 zugeordneten zweiten Abzugseinheit 12 den eigentlichen Verpackungskomponenten zuführbar. Hierbei ist jeweils eine Formschulter 12.1 vorgesehen, über welche die Folienbahn 9.1 ziehbar ist. Die Oberseite der Folie 9 (siehe auch Fig. 1) bildet später die Innenseite des fertigen Schlauchbeutels. Der Formschulter 12.1 ist in Förderrichtung D ein Formelement 13 nachgeordnet, wie insbesondere Fig. 5 zeigt. Auf der Höhe des Formelements 13 ist eine Längssiegeleinheit 14 angeordnet, mit welcher eine Längsnaht herstellbar ist.

Die auf der Vorderseite angeordnete Längssiegeleinheit 14 kann eine Ultraschall-Längssiegeleinheit sein, bei welcher Amboss und Sonotrode kombiniert sind, wobei der Amboss einen mittig angeordneten Schlitz aufweist, durch welchen die Folie führbar ist, wie auch in der DE 20 2009 012 907 beschrieben ist.

Hinter dem Formelement 13, rückwärtig zur Folienführung angeordnet, ist für jeweils eine Produktionslinie 1.1 eine Abzugsrolle 15 vorgesehen, mit Hilfe derer die Folie 9 weiterführbar ist. Hierdurch wird eine falten-/wellenfreie Führung der Folie 9 gewährleistet. Dem Formelement 13 in Förderrichtung (Pfeil D) direkt nachgeordnet ist eine Seitenfalteinrichtung 18 (siehe Fig. 4), mit welcher beidseitig jeweils eine Falte in die Seiten des entstehenden Schlauchbeutels faltbar ist. Unterhalb der Seitenfalteinrichtung 18 ist eine Quersiegeleinheit 19 angeordnet.

Um eine Quernaht des gefalteten Folienschlauchs zu erzeugen, kann die Erfindung die Quersiegeleinheit als Ultraschall-Quersiegeleinheit ausgebildet sein, die insbesondere einen Amboss und eine Sonotrode aufweist, welche beide eine quer verlaufende Nut aufweisen, die Amboss oder Sonotrode in einen oberen und einen unteren Siegelbereich trennt, womit eine doppelte Quernaht siegelbar ist.

Der Quersiegeleinheit 19 in einem bestimmten Abstand, der einer oder zwei Schlauchbeutellängen eines fertigen Schlauchbeutels entspricht, nachgeordnet, ist eine Schneideinheit 20.

Die einzelnen Verpackungskomponenten der Produkteinheit 1.1 werden im Folgenden im Hinblick auf die Zeichnungen näher erläutert. In den Fig. 1 - 3 ist vor allem eine Stapeleinheit 4 gezeigt, wobei die Stapeleinheit 4 in ihrer Längsausdehnung senkrecht zu einem Förderende A der Produkte 3 angeordnet ist. Nicht Gegenstand der Erfindung ist die Stapeleinheit 4 der Fig. 1 - 3 in dieser Ausgestaltung aus vier rotierbaren Schwenkarmen 4.1 bis 4.4, die mittels ringförmiger Halterungen 4.5 auf einer Achse 5 montiert sind. Die Schwenkarme 4.1 - 4.4 sind gemeinsam in ihrer Längsausdehnung entlang der Achse 5 gleich lang wie diese. Die ringförmigen Halterungen 4.5 sind längs der Achse 5 unmittelbar hintereinander angeordnet. Die Schwenkarme 4.1 - 4.4 sind je nachdem an welcher der vier Halterungen 4.5 sie angeordnet sind, gegebenenfalls zu einer ihrer Längsseiten länger ausgebildet als zu der entgegengesetzten. Die Breite der Schwenkarme 4.1 - 4.4 ist der Anzahl der Förderbänder 2.1 - 2.6 angepasst, so dass in einem Arbeitsschritt stets von allen Bändern gleichzeitig Produkte 3 in die Stapeleinheit 4 abgebbar sind. So ist gewährleistet, dass möglichst viele Schwenkarme platziert werden können und die Breite der Förderbänder abdeckbar ist.

Die Schwenkarme 4.1 bis 4.4 (Fig. 3, 4) sind hierbei mittels einer gemeinsamen Steuerung im Verbund oder auch einzeln ansteuerbar. Jeder Schwenkarm 4.1 bis 4.4 weist in dieser Ausgestaltung sechs Kassetten 6 als Halterungen für die Produkte 3 auf, die gabelförmig ausgebildet sind, wobei die zugehörigen Gabelzinken Halteplatten sind, die einen ersten Zwischenraum 6.1 und einen zweiten Zwischenräume 6.2 einschließen. Die Länge und Breite der Zwischenräume 6.1 und 6.2 sind im Wesentlichen derart bemessen, dass jeweils ein Produkt 3 in seiner Höhe und Breite locker aufnehmbar ist. In einem Bewegungsablauf, d.h. einer Rotation z.B. eines Schwenkarmes 4.1 sind vorzugsweise zwei Produkte 3 in einem hintereinander einzeln in die Zwischenräume 6.1, 6.2 und damit in die Kassette 6 einpassbar.

Die Schwenkarme 4.1 - 4.4 weisen in einem Querschnitt eine konisch zur Mitte hin zulaufende Geometrie auf, wodurch auch Kassetten 6 mit unterschiedlichen Kassettengrößen/- höhen anbringbar sind. Diese Ausgestaltung zeigt eine Kassette 6 mit zwei Zwischenräume 6.1, 6.2 für die Produkte, es sind jedoch auch Kassetten 6 mit nur einer Ausnehmung bzw. mehr Zwischenräume möglich, so dass 3 oder mehr Produkte 3 stapelbar sind. Eine Rotation der Schwenkarme 4.1 bis 4.4 erfolgt grundsätzlich entgegen dem Uhrzeigersinn (Rotationsrichtung B), wobei um die Strecke von der Produktführung 2 bis zu einer Einfüllposition zu überbrücken, eine Drehung von ca. 270° erfolgen muss (siehe auch Fig. 3).

Zur besseren Halterung der Produkte 3 in den Kassetten 6 sind an den dem Schwenkarm zugewandten Abschluss der Zwischenräume 6.1, 6.2 Luftzuführungen in Form von schlitzförmigen Kanälen (nicht dargestellt) angeordnet, wobei mittels hohler Schäfte innerhalb der Achse des Schwenkarmes Luftleitungen zuführbar sind, die einen von der Kassette 6 wegströmenden Luftstrom erlauben, wodurch die Produkte 3 in die Kassetten 6 einsaugbar und damit gehalten sind. Insbesondere in Fig. 4 ist gezeigt, wie ein derartiges Stapeln erfolgt.

Damit die Produkte 3 aus der Halterung der Kassetten 6 beschädigungsfrei auslösbar sind, ist knapp oberhalb des Formelements 13 ein Auswerfer 17 vorgesehen (insbesondere Fig. 5). Der Auswerfer 17 ist im Wesentlichen als eine längliche Gabel ausgebildet, deren Zinken 17.1 parallel zur Förderrichtung A der Produkte stark verlängert sind. Die Spitzen der Zinken 17.1 weisen Schutzpolster 17.2 auf, um Beschädigungen an den Produkten 3 zu verhindern. Der Auswerfer 17 ist in vertikaler Richtung beweglich gelagert, so dass zur Entfernung der Produkte 3 aus den Zwischenräumen der Kassetten 6 der Auswerfer 17 vertikal nach unten bewegbar ist. Der Abstand der Zinken 17.1 ist derart bemessen, dass die Kassetten 6 der Schwenkarme 4 ohne Weiteres den Auswerfer 17 passieren können.

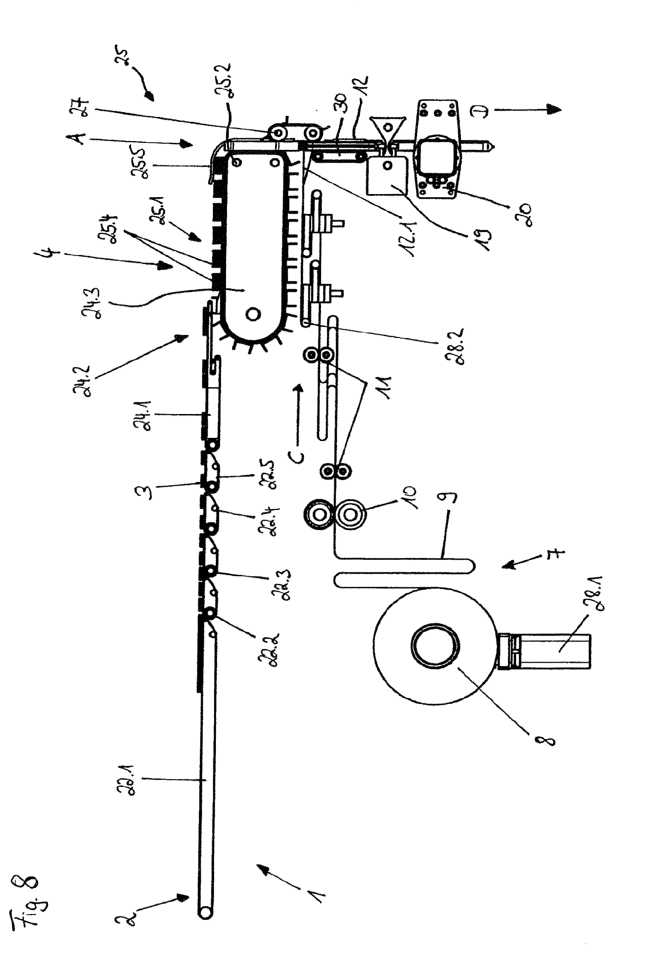

Eine zweite Abzugseinrichtung 12 (Fig. 1 bis 3) umfasst zur Kantenführung der Folie 9 insbesondere eine Formschulter 12.1 in Fig. 8. Die Formschulter 12.1 hat in an sich bekannter Weise ein der Folie 9 zugewandtes Schulterblatt mit einem im Wesentlichen ebenen Einlaufbereich 12.2. Die Formschulter 12.1 geht weiterhin in Förderrichtung der Folie 9 mit abwärts gerichteten Schenkeln 12.3 in das Formelement 13. Die äußeren Kanten der Formschulter 12.1 sind derart geführt, dass beide parallel zueinander in ein formgebendes Füllrohr (nicht dargestellt) übergehen, welches in dieser Ausgestaltung zum ordnungsgemäßen Führen der Folie nur eine geringe Höhe aufweist. Radial dazu ist innerhalb des Füllrohrs ein sich weiter nach unten erstreckendes Formelement 13 vorgesehen, bei welchem es sich im Wesentlichen um einen seitlich offenen Führungsschaft mit rechteckigem oder quadratischem Querschnitt handelt. Das Formelement 13 ist in der Ausgestaltung in Fig. 4 im Verbund mit weiteren Komponenten der Produktionslinie gezeigt. Das Formelement 13 ist aus Metall gefertigt und ist als Führung mit offenen Längsseiten ausgestaltet. Es könnte auch als Rohr ausgestaltet sein, wobei ein Rohr an seinen Längsseiten länglich ausgebildete Öffnungen hat. Es schließt sich unterhalb an die Formschulter 12.1 an und entspricht im Querschnitt dem späteren Beutelumfang. Das Formelement 13 kann aus 2 ineinandersteckbaren Teilen aufgebaut sein, so dass die Folie 9 eine konsequente Verformung erfährt. Die Führung der Folienränder ist so ausgestaltet, dass diese um das Formelement 13 herum führbar sind und letzteres dann um seinen Umfang von der Folie 9 umschlossen ist.

Wie insbesondere Fig. 3, 5 zu entnehmen ist, ist vor dem Formelement 13 eine Einfädelplatte 13.1 mit einem Schlitz 13.2 vorgesehen, das somit zwischen Formelement 13 und der Längssiegeleinheit 14 angeordnet ist, um eine Zusammenführung der Folienränder für ein sogenanntes "Fin-Seal", bei welchem die Folienränder flach aneinanderliegen, Die Einfädelplatte 13.1 weist mittig in Längsrichtung den Schlitz 13.2 auf, der über die gesamte Länge der Einfädelplatte 13.1 ausgebildet ist. Der Schlitz 13.2 ist derart geformt, dass Folienränder der Folienbahnen 9.1 aus dem Schlitz 13.1 heraustreten können und an den Rändern aneinanderliegen. Das Formelement 13 weist auf der der Formschulter 12.1 gegenüberliegenden Seite eine nach oben gerichtete, leicht nach außen gebogene Lasche 13.3 auf. Diese dient insbesondere dazu ein Einführen der Produkte 3 zu erleichtern.

Teil des Formelements 13 ist eine rechts und links neben der Einfädelplatte nebengeordnete Transport- oder Fördereinheit 16 für die Produkte 3 innerhalb des entstehenden Schlauchbeutels, welche ein erstes Transportband 16.1 sowie ein zweites Transportband 16.2 aufweist. Diese Transportbänder 16.1, 16.2 sind Endlosbänder, die von einer Steuereinheit (nicht dargestellt) mit der gleichen Geschwindigkeit wie die der Folie 9 antreibbar sind. Die Transportbänder 16.1, 16.2 weisen eine Oberfläche auf, die mit einem Schaumstoff oder ähnlichem Material belegt ist, so dass Beschädigungen der Folie 9 weitgehend vermieden werden.

Der Verpackungsschlauch wird innerhalb des von der Einfädelplatte 13.1 des Formelements und der Transportbänder 16.1, 16.2 umschlossenen Raums gebildet und durch diese Elemente geführt; ein übliches separates Formatrohr um dessen Außenseite der Schlauch gebildet und geführt wird und durch den die Produkte in den gebildeten Schlauch frei fallen, wie dies bei herkömmlichen Verpackungsmaschinen der Fall ist, ist nicht vorgesehen. Durch die erfindungsgemäße Ausgestaltung erfolgt eine kontrollierte Führung der Produkte in den Verpackungsschlauch.

Die Transportbänder 16.1, 16.2 sind hierbei so angeordnet, dass sie in seitliche Öffnungen (nicht dargestellt) (des Formelements 13) ragen, wobei die Bänder 16.1, 16.2 unter einer leichten Federspannung stehen, so dass sie unter Spannung stehend, in die Folie leicht eindrücken. Hierdurch wird gewährleistet, dass ankommende Produkte 3 nicht einfach in den Beutel fallen, sondern von den beidseitig laufenden Transportbändern 16.1, 16.2 auffangbar sind, und mit der Geschwindigkeit der Folie 9 zum Boden des entstehenden Schlauchbeutels beförderbar sind. Weiterhin sind die Bänder 16.1, 16.2 längs in der Mitte ihrer Breite geteilt ausgebildet, so dass jedes Produkt 3 von beiden Seiten optimal innerhalb der Folie gehalten ist. Zudem kann somit eine nachfolgende Seitenfalteinrichtung 18 nah an die Keksbefüllung angeordnet werden, so dass Elemente der Seitenfalteinrichtung 18 in den Bereich der Transportbänder 16.1, 16.2 eingreifen können, ohne letztere in ihrer Funktionsweise zu behindern.

Des Weiteren weist die zweite Abzugseinrichtung 12, wie in Fig. 2, 3 und 5 gezeigt ist, wenigstens eine Abzugsrolle 15 auf, die rückwärtig unterhalb der Formschulter 12.1 am Formelement 13 angeordnet ist. In der vertikalen Fortführung der Formschulter 12.1 ist in geeigneter Weise der Abzugsrolle 15 zugewandt eine Aussparung vorgesehen, in welche die Abzugsrolle 15 an der Folie 9 angreift. Die Abzugsrolle 15 ist auf einer Welle 15.1 drehbar gelagert und kann mittels einer Steuereinrichtung (nicht dargestellt) angesteuert werden. Eine derartige Abzugsrolle 15 kann einen inneren zylindrischen Kern aus Metall aufweisen, der mit einer Schicht Kunststoff ummantelt ist, um die Folie vor Beschädigungen zu schützen. Durch die Anordnung der Abzugsrolle 15 an dieser Stelle ist die falten- und/oder wellenfreie Abziehbarkeit der Folie 9 wesentlich verbessert. Andere übliche Verfahren, z.B. Vakuumtransportrollen können ebenfalls vorgesehen sein.

In Fig. 3 sowie 4 ist eine Siegelung der Längsnaht des Schlauchbeutels dargestellt. Die Längssiegeleinheit 14 weist pro Produktionslinie einen Längssiegelamboss 14.1 zur Ultraschallsiegelung der Folie 9 auf. Der Amboss 14.1 hat hierbei eine im Wesentlichen zylindrische Form mit abgeschrägten Ecken. Zur Spitze hin ist der Amboss 14.1 als quaderförmiges Teil mit einem Schlitz (nicht dargestellt) an dessen Stirnseite ausgebildet ist. Der Schlitz ist in Längsrichtung durchgängig ausgeformt und weist eine derart bemessene Breite auf, dass wenigstens eine Doppellage der Folie 9 dazwischen passt. Die Stirnseite des Amboss 14.1 ist mittig vor dem Formelement 13 angeordnet, wobei der Schlitz 13.1 des Formelements 13 und der Schlitz des Amboss 14.1 in vertikaler Richtung sich deckend gegenüberliegen. Hierdurch ist gewährleistet, dass die Folie 9 durch den Schlitz 13.1 in den Schlitz des Ambosses 14.1 ragt und dort in einer kontinuierlichen Betriebsweise versiegelbar ist. Andere Methoden der Längsnahtsiegelung, z.B. Heißsiegelung oder Heißluftsiegelverfahren sind ebenfalls möglich.

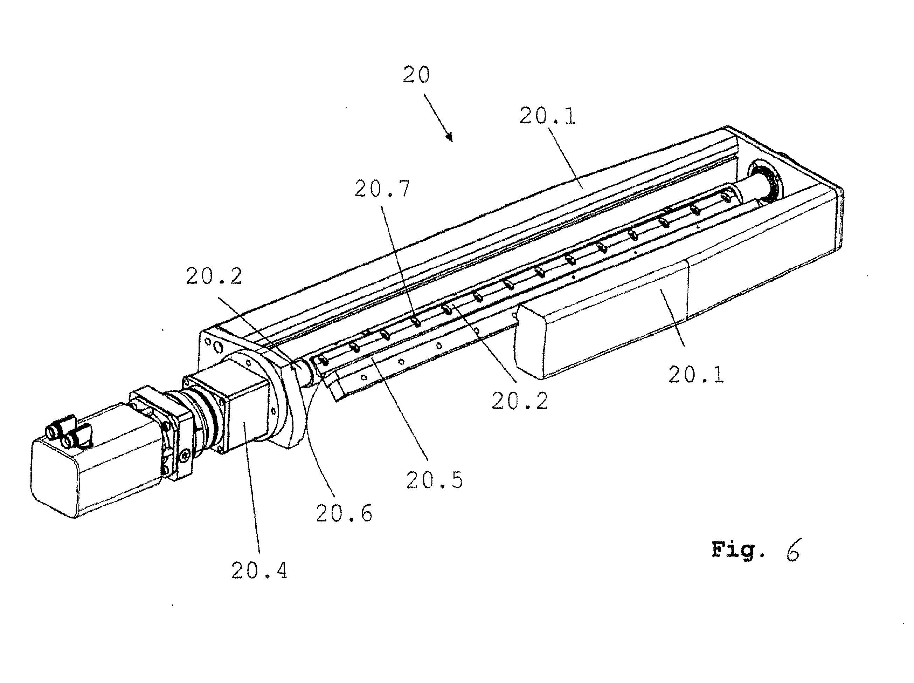

Ferner ist in Fig. 4 eine Teilansicht der Schlauchbeutelmaschine 1 gezeigt, wobei entlang der vertikalen Produktführung unterhalb des Formelements 13 die Seitenfalteinrichtung 18 dargestellt ist. Eine solche ist detaillierter in Fig. 5 gezeigt. Die Seitenfalteinrichtung 18 weist pro Produktionslinie jeweils zwei ringförmige Faltelemente 18.1 oberhalb und unterhalb der Quersiegeleinheit 19 auf. Diese sind an sich ringförmig ausgebildet und weisen jeweils einen teilhalbkreisförmige Nocken 18.2 an einer Seite auf. Die Faltelemente 18.1 sind in der Fig. 5 in einer Ausgangsposition dargestellt, bei der ihre Nocken 18.2 gegeneinander gerichtet sind und zwischen diesen, wie an der rechten Seite der Fig. 6 angedeutet ist, die Beutelbahn verläuft.

Eine Welle 18.3 verbindet die Faltelemente 18.1 jeweils mit Lagern 18.5, in rechteckigen Gehäusen 18.4. Über eine Antriebseinheit 18.6, die aus jeweils einem Antriebsrad 18.7 und einen ein zweites gegenüberliegendes Antriebsrad 18.7 verbindenden Zahnriemen 18.8, einem Winkelgetriebe 18.9 sowie eine Welle 18.10 gebildet ist, sind mittels einer Steuereinheit mit einem Drehmotor 18.11 die Faltelemente 18.1 in Bewegung setzbar. Durch die Drehung der Faltelemente 18.1 drücken die Nocken 18.2 in den Folienschlauch ein. Die Länge des Nockens 18.2 bestimmt hierbei die spätere Tiefe der Falte.

Eine Seitenfalteinrichtung 18 - wie vorstehend beschrieben - ist jeweils oberhalb und unterhalb einer Quersiegeleinrichtung 19 angeordnet. Eine solche Quersiegeleinheit 19 ist neben Fig. 1 auch in den Figuren 2, 3 und 4 dargestellt. Diese ist in Abstand zum Formelement 13 angeordnet. Der Abstand bestimmt die Anzahl der Produkte, die in einem Schlauchbeutel verpackbar sind. Die Quersiegeleinheit 19 ist wiederum eine Ultraschallsiegeleinheit, wie sie auch zuvor beschrieben wurde. Die Quersiegeleinheit 19 weist jedoch einen Amboss 19.1 und eine Sonotrode 19.2 auf, die gegeneinander drückbar sind. Bei dem Amboss 19.1 handelt es sich um einen Doppelamboss, womit eine Doppelnaht mit zwei Quernähten in einem geringen Abstand zueinander gleichzeitig setzbar ist. Hierzu ist die vordere Stirnseite des Amboss 19.1 im Wesentlichen rechteckig ausgebildet. Quer mittig ist eine Nut (nicht dargestellt) ausgebildet, die eine Siegelung in diesem Bereich verhindert, wodurch die Doppelnaht regelbar ist. Die gegenüber diesem Amboss 19.1 angeordnete Sonotrode 19.2 kann somit gleichzeitig die genannte Doppelnaht mit einer oberen und einer unteren Einzelnaht siegeln. Die obere Naht bildet den unteren Beutelabschluss eines entstehenden Schlauchbeutels, die untere Naht bildet die obere Abschlussnaht eines bereits gefüllten Beutels. Über eine Regel- und Steuereinheit (nicht dargestellt) ist die Ultraschalleinheit 19 bedienbar.

Fig. 6 zeigt eine Detailansicht einer Schneideinheit 20. In einer rechteckig geformten Halterung 20.1 ist mittig auf einer Welle 20.2 ein länglich ausgeformtes Messer 20.3 angeordnet. Mittels einer Steuereinheit 20.4 ist die Welle bzw. das Messer 20.3 vorzugsweise im Uhrzeigersinn drehbar. Das Messer 20.3 weist an seinem einem Gegenstück 20.5 zugewandten Ende eine Schneide 20.6 auf. Das Messer 20.3 ist mittels von Befestigungsmitteln, insbesondere Schrauben auf der Welle 20.2 in einer bestimmten Position befestigbar, wobei das Messer 20.3 derart in einen teilkreisförmigen Ausschnitt in die Welle 20.2 einsetzbar ist, dass die Schneide 20.6 waagrecht aus diesem Ausschnitt herausragt. Zur Befestigung weist das Messer Schraubenöffnungen 20.7 auf, womit ein leichtes Austauschen gegeben ist. Das Gegenstück 20.5 ist in einem bestimmten Winkel zur Messerschneide 20.6 angeordnet, so dass das Messer 20.3 mit seiner Schneide 20.6 in der Rotation auf die zwischen Messerschneide 20.6 sowie Gegenstück 20.5 durchlaufende Folie 9 einwirken kann. Das Messer kann weiterhin eine zweite Schneide aufweisen, die auf der gegenüberliegenden Seite der Welle 20.2 ausgebildet ist.

Im Folgenden soll ein erfindungsgemäßer Verfahrensablauf anhand der Ausgestaltung der Fig. 1 bis 7 näher erläutert werden:
Zunächst werden Produkte 3 über die verschiedenen Förderbänder 2.1 bis 2.6 der Anlage zugeführt, wobei in diesem Funktionsbeispiel eine Maschine 1 mit sechs Bahnen, d.h. sechs Produktionlinien 1.1, gezeigt ist. Am Ende der Förderbänder 2.1 bis 2.6 (Förderende A) werden die Produkte 3 mittels der Überführ- und Stapeleinheit 4 von einer waagerechten in eine senkrechte Füllposition gebracht. Hierbei wandert ein erstes Produkt 3.1 in einen ersten Zwischenraum 6.1 der Kassette 6 der Stapeleinheit 4, wobei der jeweilige Schwenkarm der Stapeleinheit 4 entgegen des Uhrzeigersinns in einer der Fördergeschwindigkeit der Produkte 3 angepasste Geschwindigkeit weiter rotiert. Das erste Produkt 3.1 wird mittels Luftansaugung innerhalb der Kassette 6 im ersten Zwischenraum 6.1 gehalten. Durch gleichzeitiges Weiterrotieren des Schwenkarmes sowie Weiterlaufen des Förderbandes erreicht ein zweites Produkt 3.2 den zweiten Zwischenraum 6.2 der Kassette 6 der Stapeleinheit 4. Auch dieser wird mittels einfachen Ansaugens im Zwischenraum 6.2 gehalten. Die Schwenkarme 4.1 bis 4.4 rotieren, wie gesagt, entgegen des Uhrzeigersinnes, wobei ein Transport der Produkte um 270° erfolgt. Die Schwenkarme 4.1 bis 4.4 können einzeln angesteuert werden, um auf Schwankungen der Produktförderung zu reagieren. Ist ein erster Schwenkarm 4.1 mit Produkten 3 bestückt und befördert die Produkte 3 weiter, kann bereits die nächste Fuhre Produkte 3 mittels eines zweiten Schwenkarmes 4.2 aufgenommen werden. Die Anzahl der verwendeten Schwenkarme ist auf die zu fahrende Taktrate abstimmbar. So sind auch nur zwei oder auch drei Schwenkarme denkbar.

Die befüllte Stapeleinheit 4 verschwenkt - wie in Fig. 1 dargestellt - um insgesamt 270° und die Produkte 3 gelangen so in eine nach unten weisenden vertikale Position, wobei die Kassetten 6 der Schwenkarme 4.1 - 4.4 zwischen den Zinken 17.1 der Auswerfer 17 kurz zu liegen kommen, die jeweils zu jeder Produktionslinie vorgesehen sind. Der Auswerfer 17 führt eine kurze vertikale Bewegung nach unten durch, wodurch die Produkte 3 aus ihrer Halterung gelöst werden und in die weiteren Verpackungskomponenten fallen - nämlich über das Formelement 13 in den durch dieses gebildeten Verpackungsschlauch. Hiernach dreht sich der Schwenkarm in Rotationsrichtung B weiter, um - wieder am Förderende A der Förderbänder 2 angelangt - neue Produkte 3 aufzunehmen.

Gleichzeitig findet unterhalb der Förderbänder 2.1 bis 2.4 Abzug der Folie 9 von der Folienrolle 8 mittels der ersten Abzugseinheit 7 statt (Fig. 1, 2), wobei die Folie 9 mittels der rotierenden Schneidmesser 11 in Folienbahnen 9.1 geschnitten wird und mittels der zweiten Abzugseinrichtung 12 über eine Formschulter 12.1 gezogen wird. Die Folie 9 mündet dann innerhalb der Formschulter 12.1 und wird um das sich nach unten anschließende Formelement 13 gezogen, wobei dieses durch die Folie 9 vollständig umschlossen wird. Das Formelement 13 formt den Schlauchbeutel in der gewünschten Form weiter, wobei die Folie 9 rückwärtig von einer Abzugsrolle 15 leicht unter Spannung gehalten wird. Die Folienränder werden durch die Schenkel 12.3 der Formschulter 12.1 um das Formelement 13 geleitet und in den Schlitz 13.1 eingefädelt. Gleichzeitig ragen die Folienränder in einen Schlitz des Siegelambosses 14.1. Die Längssiegeleinheit 14 siegelt durch Ultraschall die besagten Ränder kontinuierlich zu einem Folienschlauch zusammen.

Die Produkte 3 fallen, wie schon gesagt, in den Folienschlauch (Fig. 3, 5), wobei diese bis zu den Transportbändern 16.1 und 16.2, die aufgrund ihrer jeweils nach außen gerichteten Spannung leicht in die Folie des Folienschlauchs drücken und in das Formelement 13 ragen, aufgefangen werden und aufgrund ihrer entgegengesetzten Spannung sorgfältig und vorsichtig in das Innere des Beutels geführt werden. Die Transportbänder 16.1, 16.2 und die Folie 9 weisen gleiche Fördergeschwindigkeiten auf. Gleichzeitig erfolgt unterhalb der Längssiegeleinheit 14 eine Seitenfaltung durch die Seitenfalteinrichtung 18, wobei die Faltelemente 18.1 nacheinander seitlich in den entstandenen Folienschlauch eindrücken und einen seitlichen Falz entstehen lassen. Die doppelt gefaltete Folie wird hiernach von der Quersiegeleinheit 19 in dieser Form versiegelt, wobei, wie oben beschrieben, eine Doppelnaht gesiegelt wird. Hiernach erfolgt wiederum eine Bedienung der zweiten Seitenfalteinrichtung 18, die für eine faltenlose Quersiegelnaht sorgt (Fig. 6). Die Geschwindigkeit, bzw. Taktrate der Maschine kann hierbei so eingestellt werden, dass ein Stapel aus zwei Produkten 3 oder auch mehrere Stapel von Produkten 3 in einen solchen Beutel gefüllt werden können. Durch Verändern der Taktraten sind verschiedene Einfüllmuster von Produkten, wie z.B. 1x2, 2x2, 3x2, 4x2 möglich.

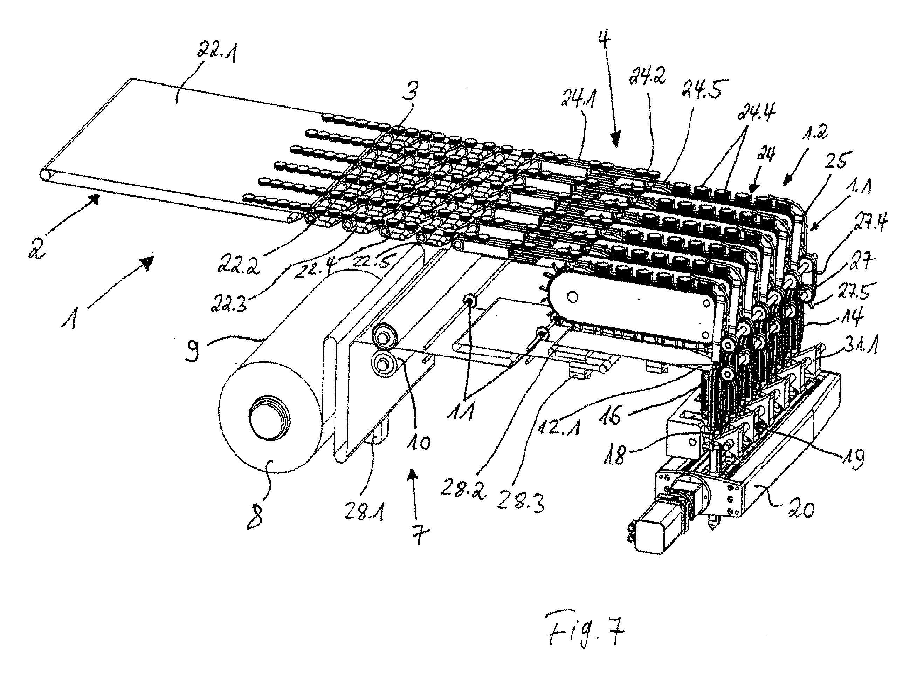

Im Weiteren, nach ca. einer oder zwei Schlauchbeutellängen, findet die Trennung von nach und nach entstehenden Schlauchbeuteln statt (Fig. 7). Dies wird mit der Schneideeinheit 20 bewerkstelligt. Hierzu wird mittels der Steuereinheit 20.4 die Welle 20.2 angetrieben, womit das Messer 20.3 um die Längsachse der Welle 20.2 rotiert. Ein Schneidevorgang findet statt, wenn die Schneide 20.6 des Messers 20.3 auf das Gegenstück 20.5 trifft und an diesem scherenförmig abgleitet. Die Rotation der Welle 20.2 wird mit einer bestimmten Geschwindigkeit gesteuert, damit jeweils der Zwischenbereich der Doppelnaht vom Messer 20.3 getroffen wird.

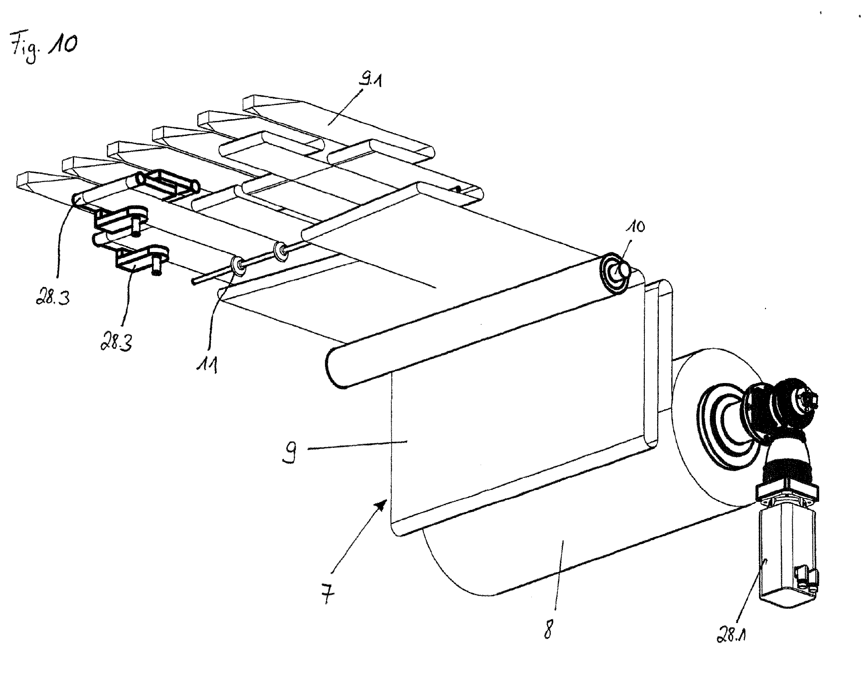

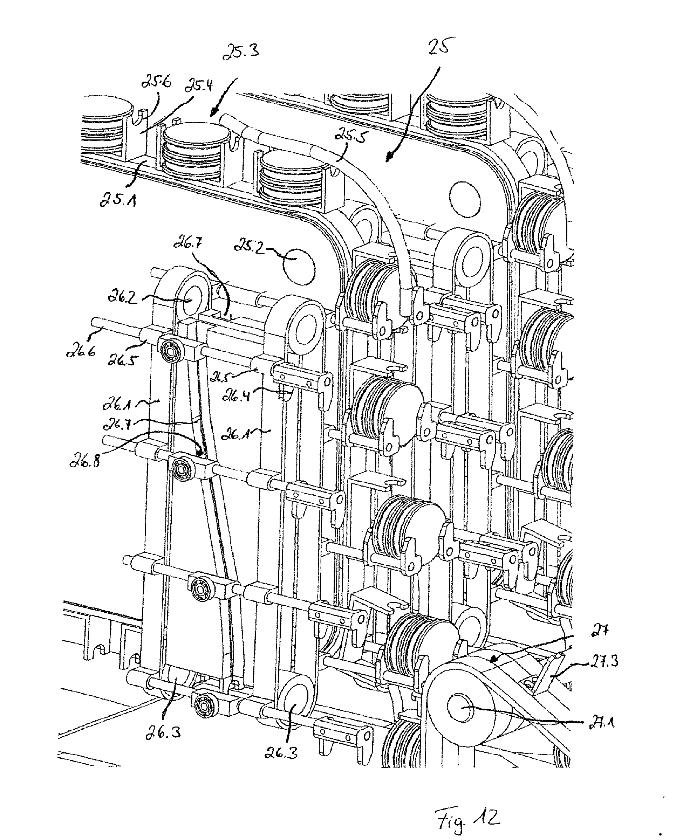

Die Fig. 7 bis 14 beschreiben im Folgenden eine erfindungsgemäße Schlauchbeutelmaschine 1. Gleiche Bezugszeichen bezeichnen gleiche Teile. Die Fig. 1 zeigt die wesentlichen Komponenten der Ausgestaltung der Schlauchbeutelmaschine 1 in einer perspektivischen Ansicht. Die Schlauchbeutelmaschine 1 weist Produktführungen 2 in Form von Förderbändern 22.1 bis 22.5 mit Antriebsmitteln (nicht dargestellt) auf, die die stückigen Produkte, insbesondere Produkte 3, mittels einer Stapeleinheit 4 den weiteren Verarbeitungs- bzw. Verpackungskomponenten zuführen. Auch in dieser Ausgestaltung bilden die Verpackungskomponenten in vertikaler Richtung zusammen mit den Produktführungen 2 und der Stapeleinheit 4 Produktionslinien 1.1. Die Produktionslinien 1.1 und deren weitere Komponenten sind insbesondere in den Fig. 7 bis 9 dargestellt. Die Stapeleinheit 4 ist dabei in Fig. 10 ersichtlich. Die Fig. 12 bis 14 zeigen nebeneinander geordnete Produktionslinien 1.1 abschnittsweise in einer Einzeldarstellung ohne Folienzuführung zur besseren Übersicht.

Die Produktführungen 2 als aufeinanderfolgende Endlosförderbänder 22.1 bis 22.5 sind mit einer gummierten Lauffläche versehen. Die Produkte 3 sind von einem breiten Endlosförderband 22.1 auf die einzelnen Bahnen geführt, wobei der Bereich von der Produktführung 2 zur Stapeleinheit 4 mittels wenigstens vier als Endlosförderbänder ausgebildeten, hintereinander angeordneten Separierbändern 22.2 bis 22.5 überbrückt ist. Diese sind pro Produktionslinie 1.1 gleich ausgebildet. Die Separierbänder 22.2 bis 22.5 sind bei der Ausgestaltung der Fig. 8 in ihrer Länge derart bemessen, dass wenigstens zwei Produkte 3 hintereinander Platz finden. Den Separierbändern 22.2 bis 22.5 sind Antriebsmittel (nicht dargestellt) zugeordnet, die die vier Förderbänder in unterschiedlichen Geschwindigkeit antreiben. Hierdurch wird gewährleistet, dass die Produkte 3 von einer kontinuierlichen Kette aus Produkten 3 mit gleichen Abständen, wie sie auf den Produktführungen 2 ersichtlich sind, zu einer paarweisen Anordnung geführt werden, wobei derartige Kekspaare je nach Anforderung und Geschwindigkeit der Maschine in einem bestimmten gewünschten Abstand zueinander beabstandet sind.

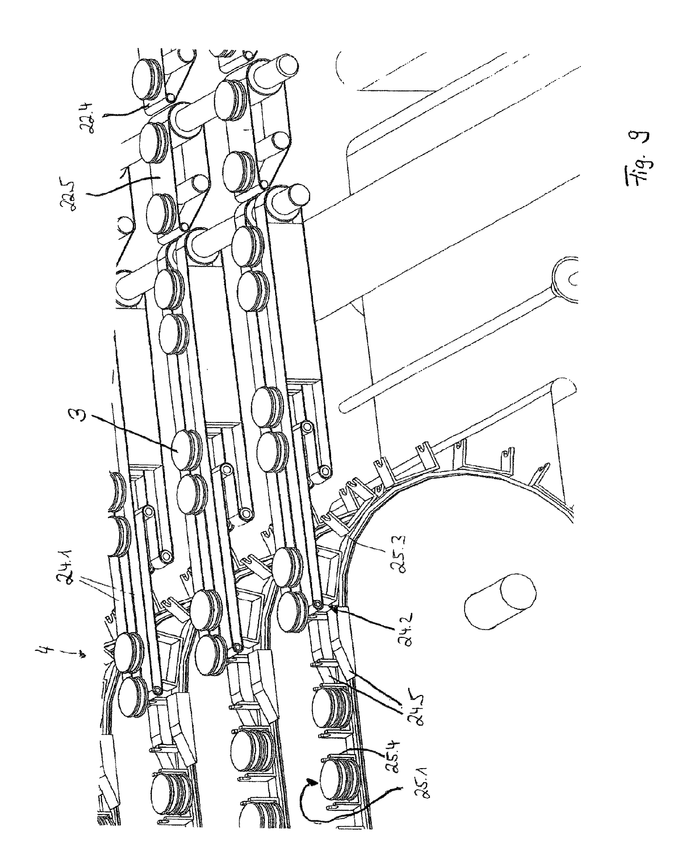

Wie insbesondere in den Fig. 9, 10 dargestellt ist, ist den Separierbändern 22.2 bis 22.5 ein Ablageband 24 nachgeordnet, welches als Teil der Stapeleinheit 4 zu Beginn derselben angeordnet ist. Das Ablageband 24 überragt mit seinem vorderen 24.2 eine zur Stapeleinheit 4 gehörende Stapelkette 25.3 leicht. Das Ende 24.2 des Ablagebandes 24 ist als bewegbare Rückzugskante ausgebildet, mittels der Kippbewegungen durchführbar sind, um die Produkte 3 in Richtung der Stapelkette 25.3 abzusenken.

Die Stapelkette 25.3 ist eine bandförmige Endloskette, auf welcher nach außen ragend vertikale Wände 25.4 angeordnet sind. Die Wände 25.4 bilden für die Produkte 3 eine im Wesentlichen U-förmige Halterung 25.1 oder Becher. Hierzu sind die Wände 25.4 L-förmig ausgebildet, wobei die zur Stapelkette 25.3 parallel anliegenden Teilstücke paarweise zueinandergerichtet sind. Hierdurch sind paarweise U-förmige Halterungen 24 für die Kekse 3 ausgebildet. Die Abstände zwischen zwei Wänden 25.4 und einer Halterung 25.1 entsprechen der Abmessung eines Produktes 3.

Um eine geringe Fallhöhe vom Ablageband 24 und eine sichere Aufnahme der Produkte 3 zwischen den Wänden 25.4 zu gewährleisten, ist zu beiden Seiten der Stapelkette 25.3 jeweils ein Absenkkeil 24.5 mit einem zwischen diesen gebildeten Spalt (Fig. 9) zwischen Ablageband 24 und Stapelkette 25.3 angeordnet. Zwischen den Keilen 24.5 ist ein Spalt gebildet, durch welchen die Wände 25.4 während des Betriebes der Stapelkette 25.3 hindurchgleiten können. Die Stapelkette 25.3 hat in der Seitenansicht in Fig. 9 im Bereich des Förderendes A ein rechteckiges Endstück mit abgerundeten Ecken. Die Stapelkette 25.3 ist Teil einer Übergabe- oder Umlenkeinheit 25 mittels derer die Produkte 3 von einer horizontalen in eine vertikale Einfüllrichtung (Förderrichtung D) bringbar sind.

Hierzu sind die Stapelketten 25.3 aus ihrer horizontalen Erstreckung und Bewegungsrichtung über eine Umlenkwalze 25.2 in eine vertikale Erstreckungs- und Bewegungsrichtung umgeleitet. Um beim Führen aus der Horizontalen in die Vertikale ein Herausfallen der Produkte 3 aus ihren Halterungen 25.1 zu verhindern, ist bei jeder Produktionslinie 1.1 im Umlenkbereich der Stapelkette 25.1 eine Führungs- oder Haltestange 25.5 vorgeordnet (die im folgenden genauer beschrieben ist). Die Haltestange 25.5 verhindert, dass Produkte 3 aus den Bahnen herausfallen bzw. ermöglicht eine optimale Führung der Produkte 3 in die weiteren Verpackungskomponenten. Die Haltestange 25.5 ist hierbei mittig kurz oberhalb der Höhe der Produkte 3 angeordnet.

Die Form der Haltestange 25.5 folgt der Ausgestaltung der Stapelkette 25.3. Die Wände 25.4 zeigen an ihrem oberen Ende eine Ausnehmung 25.6, die halbkreisförmig ausgebildet ist und eine Tiefe aufweist, die dem Durchmesser der Haltestange 25.5 entspricht, so dass für die Wände 25.4 der Bereich, den die Haltestange 25.5 absichert, beschädigungsfrei passierbar ist.

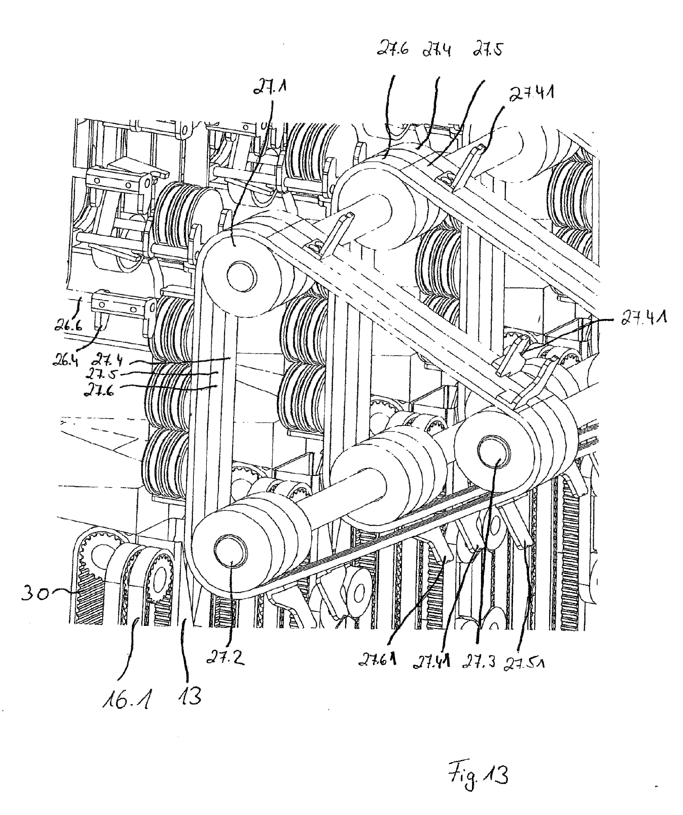

Insbesondere die Fig. 12, aber auch die Fig. 13 zeigen eine Übergabeeinrichtung 26 zum Ausheben oder Austakten der Produkte 3 aus dem vertikalen Bereich der Stapelkette 25.3 und zum Übergeben der Produkte an einen Produktportionierer 27, der in der Fig. 13 dargestellt und im Folgenden unter Bezug auf diese Figur beschrieben wird.

Die Übergabeeinrichtung 26 ist seitlich neben dem senkrechten Abschnitt der Stapelkette 25.3 angeordnet und verläuft parallel zu dieser in vertikaler Richtung. Sie weist zwei mit horizontalem Abstand zueinander angeordnete Endlosbänder 26.1 auf, die um obere und untere Umlenkwalzen 26.2, 26.3 geführt sind. Die Endlosbänder 26.1 tragen mit Abstand in ihrer Erstreckungsrichtung, der dem Abstand der Halterungen oder Bechern 25.1 der Stapelkette 25.2 entspricht ein Paar von Übergabefingern 26.4, wobei der Abstand der Übergabefinger 26.4 eines Paares der Höhe des der Stapeleinheit 4 auf dem Ablageband 24 gebildeten Produktstapels entspricht, beispielsweise bei der in den Figuren dargestellten Ausgestaltung eines Produktstapels aus zwei Einzelprodukten 3. An den Endlosbändern 26.1 sind fest Führungen 26.5 befestigt, in denen jeweils eine die Übergabefinger 26.4 tragende Stange 26.6 entlang ihrer Erstreckungsrichtung und damit horizontal beweglich geführt ist.

Zwischen den beiden Bändern 26.1 ist eine doppelte Kurvenbahn 26.7 angeordnet, in die ein auf der Stange 26.6 aufsitzender Nocken (bei 26.8; nicht dargestellt) eingreift und durch die der Nocken geführt wird. Die Kurvenbahn ist von oben - nahe dem horizontalen Bereich der Stapelkette 25.1 nach unten von hinten nach vorne, d.h. von einem näher zum Zuförderbereich der Stapelkette zum vertikal abwärts bewegten Bereich derselben geführt. Bei der - mit der Stapelkette synchronen - Bewegung der Übergabeeinrichtung greifen die Übergabefinger 26.4 von oben beidseits des Produktstapels, d.h. an seiner oberen und unteren Fläche - die im vertikalen Förderbereich der Stapelkette 26.3 ebenfalls gerichtet sind, an. Durch den in die Kurvenbahn 26.7 eingreifenden Nocken an der die Übergabefinger 26.1 tragenden Stange 26.6 werden dann die Übergabefinger 26.4 durch die Führungen der Nockenbahn 26.7 nach vorne, d.h. vor den Halterungen oder Bechern 25.1 der Stapelkette fortbewegt und heben damit die Produktstapel aus den Halterungen 25.1 der Stapelkette 25.3 heraus und übergeben diese an den Produktportionierer 27.

Die Fig. 13 zeigt im unteren Bereich der Übergabeeinrichtung 26 vor einem Füllbereich in die Schlauchbeutel einen solchen Produktportionierer 27. Der Produktportionierer 27 ist hier als dreifaches Endlosband über drei Wellen 27.1, 27.2 und 27.3 geführt, wobei die Laufrichtung der Förderrichtung D entspricht. Am Produktportionierer 27 sind an dessen drei Endlosbändern 27.4, 27.5, 27.6 jeweils angeordnete Portionierfinger 27.41, 27.51, 27.61 angebracht, die die gleiche Kontur haben und zueinander fluchten. Sie haben die Aufgabe, die von der Übergabeeinrichtung 26 aus der Stapelkette 25.3 herausgeschobenen Produkte 3 in der gewünschten Formation, in dieser Ausgestaltung drei Doppellagen, hintereinander vertikal zwischen jeweils zwei der Portionierfinger 27.41, 27.51 zu größeren Produkteinheiten zu portionieren - im dargstellten Ausführungsbeispiel mit drei Stapeln á zwei Produkten wie dies in der Fig. 13 dargstellt ist - und anschließend eine solche Produkteinheit an den Füllbereich der Endlosbeutel zur Verpackung in einen Beutel zu übergeben.

Statt drei Endlosbänder kann der Produktportionierer auch zwei aufweisen. Auch kann die Umlenkung grundsätzlich auch über zwei Walzen erfolgen. Doch hat sich die beschriebene Ausgestaltung als vorteilhaft erwiesen. Je nach Ausführung bzw. Länge des Produktportionierers 27 können eine Vielzahl von gestapelten Produkten zu einer Produkteinheit zusammengefasst werden, so z.B. 1, 2, 3 oder 4 Produktstapel.

Unterhalb der Produktführungen 2 sowie der Stapeleinheit 4 ist die erste Abzugseinheit 7 angeordnet, die neben einem Folienantrieb 28.1 eine Folienrolle 8 mit einer Folie 9, diverse Umlenkrollen (nicht dargestellt) und wenigstens eine Doppelwalze 10 aufweist. Über die Umlenkrollen ist die Folie 9 wiederum in eine Abzugsrichtung C (siehe Fig. 9) in Verbindung mit der gummierten Doppelwalze 10 unter einer gewissen Spannung haltbar und nahezu faltenfrei von der Folienrolle 8 abziehbar. Die Abzugseinheit 7 weist weiterhin eine Achse mit rotierenden Schneidmessern 11, die zur Unterteilung der Folie 9 in schmälerer Folienbahnen 9.1 ausgebildet ist. Die Schneidmesser 11 sind in dieser Ausgestaltung nicht an einer einzigen Stelle auf einer Welle quer zur Folienbahn 9, sondern versetzt angeordnet, so dass eine große Folienbahn nach und nach in einzelne Folienbahnen mit versetzen Schneidmessern 11 zerteilbar ist. Die Folie 9 ist mittels weiterer Umlenkrollen 28.2 S-förmig unterhalb der Ablagebänder 24.1 geführt. Die Umlenkrollen 28.2 sind an einer Spreizeinheit 28.2 befestigt, die dem Spreizen der geschnittenen Folienbahnen 9.1 dient.

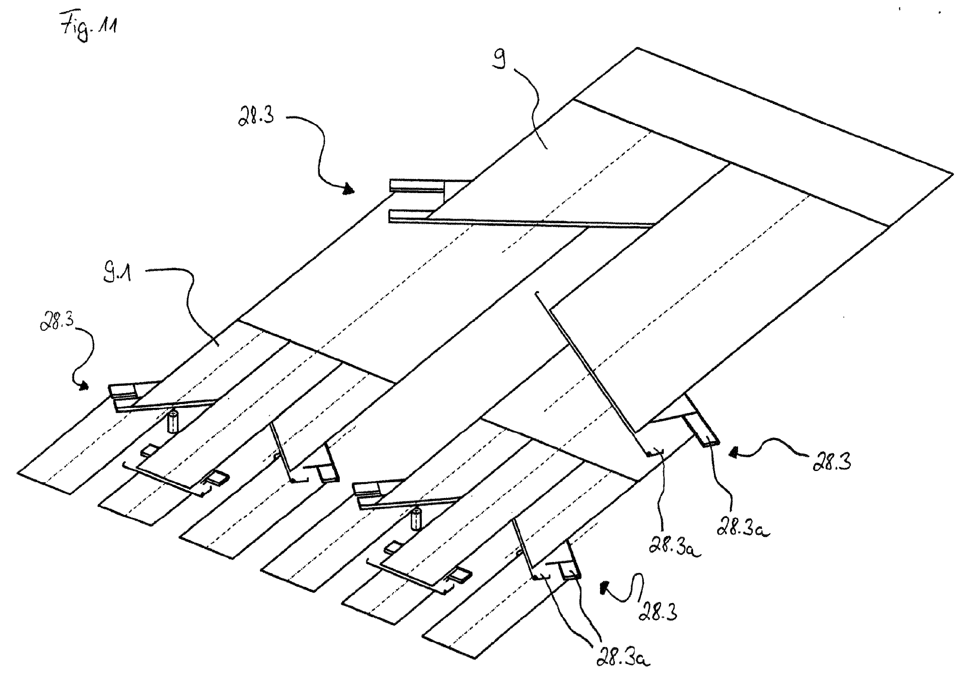

In der Fig. 10 und 11 ist der reine Folienverlauf gezeigt, wobei in die Folie 9 zunächst mittig ein Schnitt gesetzt wird. Die Folie 9 ist vor jedem neu gesetzten Schnitt durch eine s-förmige Anordnung gespannt. Die Spreizeinheit 28.2, die nahe einem Ende des Folienschnitts angeordnet ist, weist pro Folienbahn 9.1 eine Anordnung von Umlenkrollen 28.3 auf, die die Folie 9 S-förmig führen und innerhalb dieser S-Form quer zur Folienabzugsrichtung C zueinander bewegbar sind. Bei Bedarf ist hiermit der Abstand zwischen den Folienbahnen 9.1 insoweit veränderbar, dass die Schlauchbeutelmaschine 1 mit unterschiedlich breiten Folienrollen 8 nutzbar ist.

Eine Spreizeinheit 28.3 der Folie 9 besteht aus mehreren Umlenkrahmen 28.3a, die in ihrem Drehwinkel einstellbar sind. Die jeweilige Folienbahn 9.1 wird über einen Umlenkrahmen auf den benötigten Bahnversatz zur benachbarten Folie 9.1 umgelenkt. Der Drehwinkel muss einstellbar sein damit unterschiedliche Folienbreiten auf einen festgelegten Bahnversatz eingerichtet werden können. Die Folienbahn 9.1 wird in dem Umlenkrahmen 28.3a definiert zurückgeführt um dann mit dem gewünschten Versatz nach vorn aus dem Umlenkrahmen 28.3a herauszulaufen.

Die erste Spreizung führt zu einem Abstand zwischen den beiden, aus der Gesamtfolienrolle entstandenen, ersten Einzelbahnen 9.1. Die zweite Spreizung schafft einen Abstand der beiden äußeren Folienbahnen 9.1 zur mittleren Folienbahn. Ein Längenausgleich für die mittlere Folienbahn ist, für die Beibehaltung der Folienmittenlänge aller Folienbahnen 9.1, notwendig. Am Auslauf der vorderen sechs Umlenkrahmen wird ein gleicher Mittenabstand für alle Folienbahnen 9.1 erreicht.

Die Folie 9 bzw. eine einzelne Folienbahn 9.1 ist mittels jeweils jeder Produktionslinie 1.1 zugeordneten zweiten Abzugseinheit 12 den eigentlichen Verpackungskomponenten zuführbar. Die Folienbahn 9.1 ist über eine Formschulter 12.1 ziehbar. Eine Besonderheit der zweiten Ausgestaltung ist hierbei, dass anstelle eines Formelements, wie es in der ersten Ausgestaltung beschrieben wurde, eine Falteinrichtung verwendet wird, wobei der Folienabzug am hinteren Bereich angebracht ist, und an der Vorderseite mittels zweier rotierender Siegelbänder 29.1 erfolgt. Die Siegelbänder 29.1 sind einer Längssiegeleinheit 29 zugeordnet, die mittels eines Heißsiegelverfahrens eine kontinuierliche Längsnaht (hier eine Umlegenaht) erzeugt.

Zum besseren Folientransport ist dem Füllbereich E ein Abzugsriemen 30 (insbesondere Fig. 13, 14, 17) zugeordnet. Der Abzugsriemen 30 befindet sich an der Unterseite der Formatschulter 12.1, und greift von hinten an der Folie 9 an. Der Abzugsriemen 30 hat die Aufgabe, die Folie 9 strammzuziehen. Wie auch schon zur ersten Ausgestaltung beschrieben, sind seitlich des nun entstandenen Folienschlauches zwei Transportbänder 16.1, 16.2 der Transporteinheit 16 angeordnet, die ein erstes Transportband 16.1 sowie ein zweites Transportband 16.2 beinhalten und den geführten Produkttransport der Produkte 3 übernehmen. Die Transportbänder 16.1, 16.2 sind federnd gelagert und drücken seitlich die Folie gegen das Produkt. Die Geschwindigkeit mit welcher die Transportbänder 16.1, 16.2 laufen entspricht der Foliengeschwindigkeit.

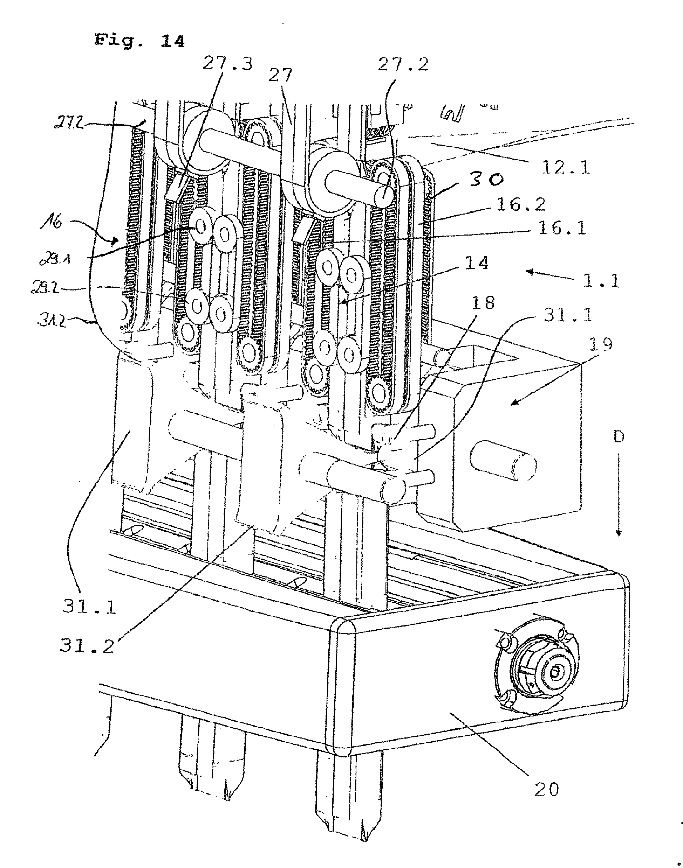

In Fig. 14 ist ein unterer Bereich einer Produktionslinie 1.1 dargestellt, wobei insbesondere die Seitenfalteinrichtung 18, die dazwischen liegende Quersiegeleinheit 19 sowie die Schneideeinheit 20 gezeigt sind. Zur Beschreibung der Seitenfalteinrichtung 18 sowie der Schneideeinheit 20 wird auf die erste Ausgestaltung verwiesen.

Die in Fig. 14 dargestellte Quersiegeleinheit 19 weist einen zylindrischen Siegelkörper 31.1 mit einer im Wesentlichen dreieckigen Grundfläche auf, der an seinen Ecken jeweils eine Siegelbacke 31.2 besitzt. Der Siegelkörper 31.1 ist auf einer Welle 31.3 befestigt und mittels dieser Welle 31.3 rotierbar. Die Quersiegeleinheit 19 ist in dieser Ausgestaltung eine Heißsiegeleinheit und ist auf zwei den Querseiten des Folienschlauch angrenzenden Seiten jeder Produktionslinie 1.1 in gleicher Kombination bestehend aus Siegelkörper 31.1 und Welle 31.3 vorgeordnet. Die Siegelkörper 31.1 sind dabei so rotierbar, dass bei einer Rotation um 60° die Siegelbacken 31.2 beider gegenläufig rotierender Siegelkörper 31.1 aneinander drücken und so eine Siegelung der dazwischen liegenden Folie 9 auslösen.

Der Verfahrensablauf einer Schlauchbeutelerzeugung nach der zweiten Ausgestaltung wird wie folgt erläutert, wobei die Unterschiede zur ersten Ausgestaltung herausgehoben sind:
Die Produkte 3 werden über das Förderband 22.1 der Anlage zugeführt, und auf den Separierbändern 22.2 - 22.5 abgelegt. Die Produkte 3 werden mittels der Separierbänder 22.2 - 22.5 durch unterschiedliche Geschwindigkeiten der einzelnen Förderbänder paarweise zusammengeführt. Die Kekspaare gelangen auf das Ablageband 24.1 und von dessen Rückzugskante 24.2 durch eine Kippbewegung nach unten über die Absenkkeil 24.5 nacheinander zwischen zwei aufeinanderfolgende Wände 25.4 auf die Stapelkette 25.3. Die Absenkkeile 24.5 verhindern hierbei, dass die Produkte 3 eine zu hohe Fallhöhe haben, und womöglich beschädigt werden. Die Geschwindigkeiten des Ablagebands 24.1 sowie der Stapelkette 25.3 werden zueinander so geregelt, dass die Produkte 3 nacheinander in den gleichen Zwischenraum fallen und somit aufeinander gestapelt werden. Die Stapelkette 25.3 bewegt sich kontinuierlich, wodurch die Wände 25.4 ebenfalls kontinuierlich in Förderrichtung bewegen. Die Wände 25.4 passieren den Spalt zwischen den Absenkkeilen 24.5 und ziehen eventuell auf den Absenkkeilen 24.5 gestapelte Produkte 3 mit sich. Die Produkte 3 werden auf der Stapelkette 25.3 liegend den weiteren Verpackungskomponenten zugeführt. Dies beinhaltet mittels der Übergabe- oder Umlenkeinheit 25 einen Wechsel der horizontalen Förderrichtung in eine vertikale Förderrichtung D, wobei die Haltestange 25.5 ein Herausfallen der Produkte 3 verhindert. Während die Stapelkette 25.3 in gleichbleibender Geschwindigkeit weiterläuft, werden die Produkte 3 zwischen zwei Übergabefingern 26.4 in der oben beschriebenen Weise ergriffen und mittels diesen aus der Halterung 25.1 der Wände 25.4 des Stapelförderers 25.3 herausgehoben. Die Produkte 3 werden um einen bestimmten Abstand, der der Höhe der Wände 25.4 entspricht, vom Förderer 25.3 nach vorne bewegt und an den Produktportionierer 27 übergeben.

Hierzu werden die einzeln von Endlosbändern 27.4, 27.5, 27.6 des Produktportionierers 27 individuell angesteuert. Zunächst wird von einem der Endlosförderer ein von diesem getragener Portionierfinger in den Bereich der Übergabeeinrichtung 26 derart bewegt, dass die Übergabefinger 26.4 einen von ihnen erfasster und gehaltener Produktstapel auf dem entsprechenden Portionierfinger ablegen und in der beschriebenen Weise freigeben können. Anschließend wird der den Produktstapel tragende Portionierfinger um die Höhe des Produktstapels (hier entsprechend dem Durchmesser der Produkte) abgesenkt, so dass der nächste Übergabefinger 26.4 seinen Produktstapel, auf den schon vom Produktportionierer 27 gehaltenen ablegen kann usw. bis die für eine Verpackung vorgesehene Produkteinheit erreicht ist (hier 3 Stapel ä zwei Produkte). Anschließend wird ein anderer Portionierfinger eines anderen Endlosbandes auf der so gehaltenen Produkteinheit abgesenkt, so dass diese zwischen zwei Portionierfinger, z.B. 27.41 und 27.51 gehalten wird und weiter gefördert werden kann. Im Folgenden nimmt dann ein weiterer Portionierfinger, z.B. 27.61 den nächsten Stapel und sukzessive die nächste Produkteinheit in der beschriebenen Weise auf.

Gleichzeitig findet unterhalb der Zuführeinrichtung 2 ein Abzug der Folie 9 von der Folienrolle 8 mittels der ersten Abzugseinheit 7 statt, wobei die Folie 9 mittels der Schneidmesser 11 in Folienbahnen 9.1 geschnitten wird und über eine Formschulter 12.1 abgezogen wird. Die Folie 9 mündet unterhalb der Formschulter 12.1 zwischen zwei Transportbänder 16.1, 16.2 der Transport- oder Fördereinheit 16 und wird zwischen die Siegelbänder 29.1, 29.2 der Längssiegeleinheit 14 eingefädelt. Die Folie 9 wird mittels der Siegelbänder 29.1, 29.2 sowie vom Abzugsriemen 30 der rückwärts der Folie angeordnet ist, weitergeführt. Die Folienränder sind zwischen den Siegelbändern 29.1 und 29.2 festgehalten, wobei die Ränder leicht unter Spannung stehen. Die Längssiegeleinheit 14 siegelt mittels eines Heißsiegelverfahrens die Ränder der Folie 9 kontinuierlich zu einem Folienschlauch zusammen.

Die Produkte 3 werden weiterhin mittels der Umlenkeinheit 1.2 in den beginnenden Folienschlauch geleitet, wobei sie in den Einzugsbereich der Transportbänder 16.1 und 16.2 gelangen, die seitlich des Füllbereichs E angeordnet sind. Die Transportbänder 16.1 und 16.2 ragen, wie auch schon zuvor beschrieben, an der Folie des entstehenden Folienschlauchs an, fangen dadurch - über die Folie - die ankommenden Produkte 3 auf und leiten sie sorgfältig und vorsichtig in das Innere des entstehenden Beutels. Gleichzeitig erfolgt unterhalb der Längssiegeleinheit 14 eine Seitenfaltung durch die Seitenfalteinrichtung 18, und eine Quersiegelung mittels der Quersiegeleinheit 19. Hierbei rotieren die Siegelkörper 31.1 zu beiden Seiten der Anlage in entgegengesetzter Weise zueinander, so dass die Siegelbacken 31.2 der Siegelkörper 31.1 je nach Taktung derart zusammendrücken, dass eine Quernaht gesiegelt wird. Durch den Druck und durch die Hitze der Siegelbacken 31.2 wird die Folie an diesen Stellen zusammengeschweißt.

Bei der Erfindung wird der Verpackungsschlauch nicht um ein inneres Formatrohr geführt und durch dieses gehalten. Maschinenseitig wird der Verpackungsschlauch vielmehr lediglich von außen gehalten, gestützt und geführt, nämlich durch die Transportbänder 16.1, 16.2, den Abzugsriemen 30 und die Einfädelplatte 13.1 (die aufgrund der Sicht der Fig. 13 bis 17 dort zum Teil nicht erkennbar ist).

Im weiteren Verlauf findet die Trennung von nach und nach entstehenden Schlauchbeuteln statt, welche wiederum von der Schneideinheit 20 bewerkstelligt wird.

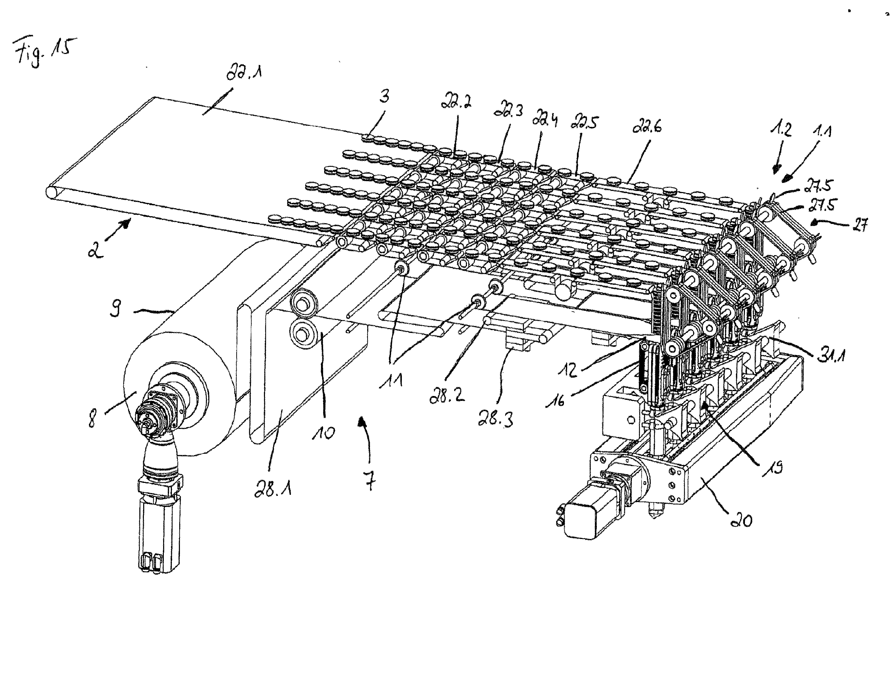

Die Fig. 15 bis 17 zeigen eine weitere Ausgestaltung wesentlicher Teile einer erfindungsgemäßen Vorrichtung und zwar der Bereich der horizontalen Zuförderung sowie der Zuführung der Folie, die vertikale Zuführung zu den eigentlichen Verpackungskomponenten, Längs- und Quersiegelung sowie Beuteltrennung, während die Übergabe aus der horizontalen in eine vertikale Vorrichtung nicht Gegenstand der Erfindung ist. Die Einzelprodukte werden dabei in bestehende Produkteinheiten vereinzelt, die als solche Produkteinheiten in einer Verpackungseinheit verpackt werden, wie dies im vorstehenden schon beschrieben wurde.

Gleiche Teile werden mit gleichen Bezugszeichen bezeichnet. Soweit einzelne Elemente und Funktionen im Folgenden nicht im Einzelnen beschrieben sind, so stimmen sie mit den ersten und/oder zweiten vorstehend beschriebenen Ausgestaltung überein, so dass auf die dortige Beschreibung verwiesen wird.

Auch bei Ausgestaltung der Fig. 15 bis 17 werden die stückigen Produkte 3, insbesondere Dauerbackwaren, wie Kekse, vor allem auch gefüllte Kekse, über eine Produktführung 2 mit einem ersten gemeinsamen Förderband 22.1 zugeführt. An das erste gemeinsame Förderband 22.1 schließen sich mehrere nebeneinander angeordnete Förderlinien an, die jeweils aus mehreren hintereinander angeordneten Separierbändern 22.2 bis 22.6 gebildet sind. Diese weisen unterschiedliche Geschwindigkeit auf und zwar vom Band 22.2 zum Band 22.6 jeweils höhere Geschwindigkeit, wodurch erreicht wird, dass der Abstand zwischen den Einzelprodukten 3 vergrößert wird.

Unterhalb der Produktzuführung 22 ist in der Fig. 15 die Zuführung der Folie und der aus dieser durch Längstrennung gebildeten Folienbahnen zur eigentlichen Verpackungs- und Siegeleinheit zu erkennen, wie dies insbesondere unter Bezugnahme auf die Fig. 1 bis 3 sowie 8, 11, 11a schon beschrieben wurde, worauf verwiesen wird, da die Ausgestaltung bei der hier gezeigten dritten Ausführungsform insofern nicht anders ist.

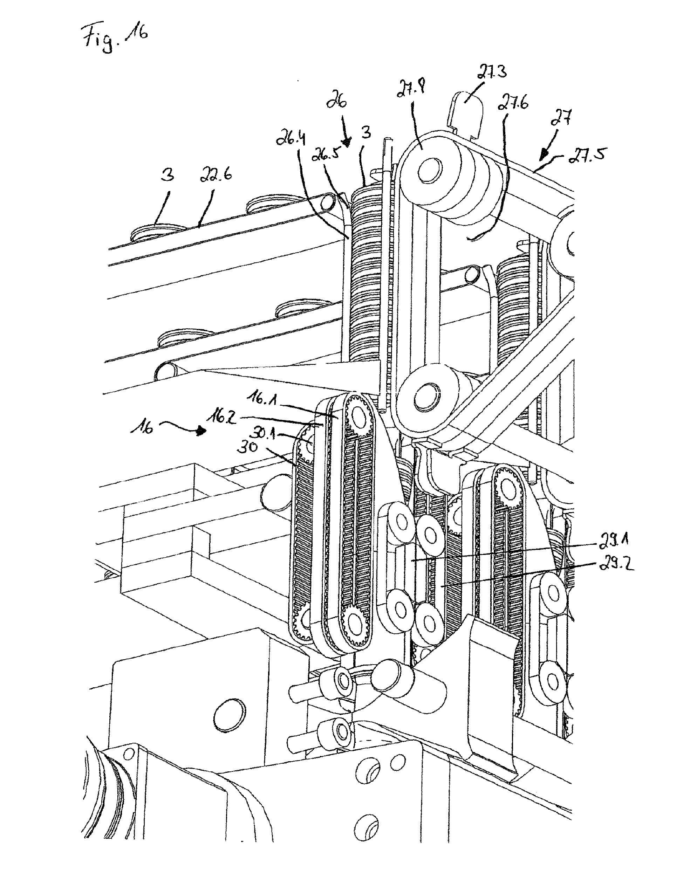

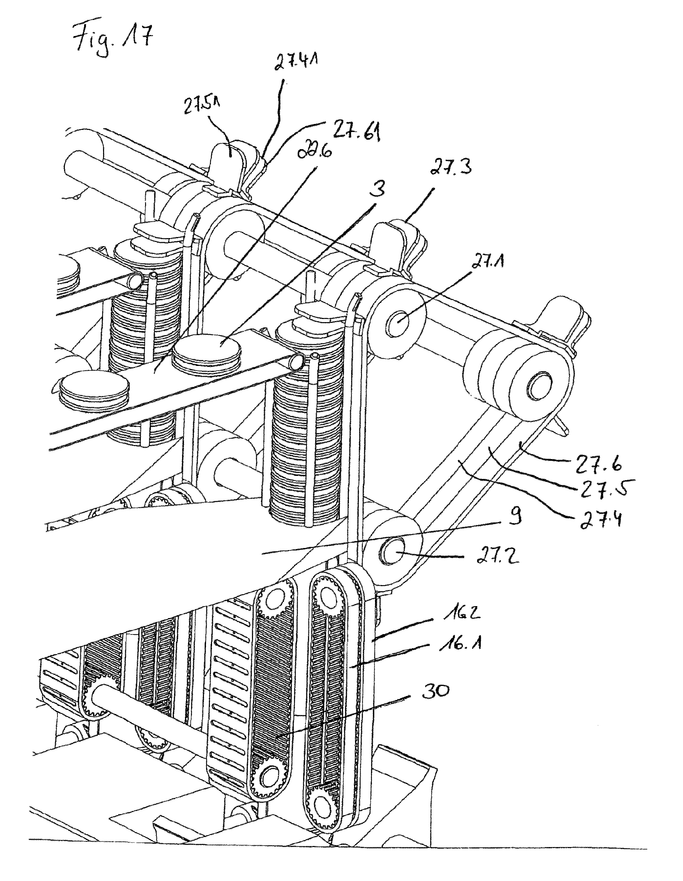

Am abgabeseitigen Ende des letzten Separierbandes 22.6 befindet sich jeweils eine Übergabeeinheit 1.2. Diese sieht einen Stapelschacht oder eine Produktführung 32 vor (Fig. 16, 17), der bzw. die hier durch vertikale Führungsstäbe 32.4 aufweisen, die einen solchen Abstand voneinander aufweisen, dass die Produkte 3 ohne Reibung durch die Führungsstäbe 32.4 geführt werden, ohne seitlich zu viel Spiel zu haben. Am oberen Ende weisen die Führungsstäbe 26.4 eine Abbiegung 32.5 nach außen auf, so dass in diesem Bereich die Produktführung 32 erweitert ist und die Produkte 3 leicht eingeführt werden können, ohne dass sie am oberen Ende eines der Stäbe gehemmt werden, wodurch sie verkanten könnten.

Wie den Fig. 16 und 17 weiter zu entnehmen ist, ist einer Produktführung 32 ein Produktportionierer 27 zugeordnet, wie dies auch schon für die beschriebene bevorzugte Ausführungsform unter Bezugnahme auf insbesondere die Fig. 12, 13 beschrieben wurde, worauf ausdrücklich verwiesen wird. Im dargestellten Ausführungsbeispiel besteht ein Produktförderer 27 ebenfalls aus drei nebeneinander angeordneten Endlosbändern 27.4, 27.5, 27.6, bei dem dargestellten Ausführungsbeispiel werden drei im Dreieck angeordnete Walzentripel 27.1, 27.2, 27.3 aus jeweils drei nebeneinander angeordneten Walzen des Produktportionierers vor das Ende des Separierbandes 22.6 geführt, wobei seine Oberseite mit der Oberseite dieses Bandes fluchtet und der Übergabefinger 27.41, 27.51, 27.61 fluchtet, also der Übergabefinger 27.41, 27.51, 27.61 horizontal gerichtet ist, so dass auf ihn das nächste ankommende Produkt geschoben werden kann.

Im Folgenden wird der Übergabefinger 27.41 taktweise nach unten gefahren, wobei jeweils ein neues Produkt auf die Oberseite des obersten Produkts in einer durch einen Übergabefinger 27.41 gehaltenen Produkteinheit aufgeschoben werden kann, bis die gewünschte Anzahl der Produkte einer Produkteinheit erreicht ist. Anschließend wird ein anderer Übergabefinger 27.51 über die so gebildete Produkteinheit bewegt, so dass diese zwischen zwei Übergabefingern 27.41, 27.51 eingeschlossen ist. Anschließend wird eine kleine Lücke gelassen, woraufhin dann mittels des dritten Endlosbandes ein dritter Übergabefinger 27.61 in horizontal fluchtender Ausrichtung mit dem Förderband 22.6 gebracht wird, so dass ein weiterer Produktstapel in der beschriebenen Weise gebildet werden kann, auf den dann wiederum ein weiterer Übergabefinger zum Abschließen aufgelegt wird.

Hierdurch wird erreicht, dass zwischen jeweils in einer Verpackung zu verpackenden Produkteinheiten aus mehreren Produkten (beispielsweise acht) ein hinreichender Abstand gebildet wird, um insbesondere die Quersiegelnaht zu ermöglichen.

Während eine weitere Produkteinheit in der beschriebenen Weise gebildet wird, wird die vorher gebildete Produkteinheit mit nach unten in den Folienschlauch und die Fördereinheit 16 mit den Transportbändern 16.1, 16.2 gefördert, wobei der auf der Produkteinheit aufliegende obere Übergabefinger 27.51 die Aufgabe hat die gesamte Produkteinheit nachzuschieben, so dass diese und insbesondere auch die Einzelprodukte nicht einfach in den Folienschlauch fallen, sondern in diesen hinein zwangsgeführt werden, bis die Produkteinheit von den Transportbändern 16.1, 16.2 der Fördereinheit erfasst wird.

Die weitere Verarbeitung geschieht in der oben, insbesondere auf die Ausgestaltung der Fig. 1 beschriebenen Weise (Schließen des Folienschlauchs durch Versehen mit einer Längsnaht, Quersiegelung etc.).

Durch die erfindungsgemäße Anordnung der Komponenten ist es möglich eine mehrbahnige Schlauchbeutelmaschine 1 zu erstellen, die in der Lage ist, die gewünschten Seitenfaltbeutel in großer Stückzahl parallel herzustellen und insbesondere horizontal zugeführte stückige Produkte, wie Produkte 3, stapelweise anzuordnen und als Stapel in die vertikal ausgerichteten gebildeten Schlauchbeutel einzufüllen.

## Patentansprüche

1. Vorrichtung zum Verpacken von stückigen Produkten, wie Keksen, in durch Folie gebildeten Schlauchbeuteln, wobei die Produkte (3) horizontal zugeführt werden, mit einer Stapeleinheit (4), mit welcher wenigstens zwei Produkte (3) zunächst aufeinander stapelbar sind und gestapelt einem Füllbereich (E) zuführbar sind, mit einer Umlenkeinheit (1.2) mit einer Stapelkette (25.3) zum geführten Umlenken der Produkte (3) von der horizontalen Zuführrichtung als Stapel in eine vertikale Einfüllrichtung (3), mit Halterungen (6, 24) zum Halten der Produkte (3) in der Umlenkeinheit (1.2), mit wenigstens einer Haltestange (25) zum Verhindern eines Herausfallens der Produkte (3) aus den Halterungen (6, 24) beim Führen derselben aus der Horizontalen in die Vertikale und mit zwei seitlich des Füllbereichs (E) angeordneter Transportbändern (16.1, 16.2) zum Aufnehmen und Fördern der Produkte (3) mit der Geschwindigkeit der schlauchbeutelbildenden Folie (9).

2. Vorrichtung nach Anspruch 1, **gekennzeichnet durch** einen Produktportionierer (27) zum Separieren von aus einer Mehrzahl von Produkten (3) gebildeten Produkteinheiten.

3. Vorrichtung nach Anspruch 2, **dadurch gekennzeichnet, dass** der Produktportionierer (27) an Endlosbändern (27.4 - 27.6) geführte Portionierfinger (27.41 - 27.61) zum Aufnehmen jeweils einer Produkteinheit aus mehreren Produkten (3) aufweist.

4. Vorrichtung nach einem der vorangehenden Ansprüche, **dadurch gekennzeichnet, dass** die Stapelkette (24.3) der Stapeleinheit (4) nach außen ausgebildete U-förmige Halterungen (6, 24) besitzt, wobei die Produkte (3) von einem Ablageband (24.1) in die Halterungen mittels Ablegekeilen (24.5) führbar sind.

5. Vorrichtung nach einem der Ansprüche 1 bis 4, **gekennzeichnet durch** eine Übergabeeinrichtung (26) mit an den Produkten angreifenden Übergabefingern (26.4) zum Anheben (Austakten) derselben aus Bechern oder Halterungen (25.3) einer Stapelkette (25.1) und zum Übergeben an einen weiteren Förderer (27), wobei die Übergabeeinrichtung insbesondere eine Nockenführung (26.7) für die Stapelfinger aufweist.

6. Vorrichtung nach einem der vorangehenden Ansprüche, **gekennzeichnet durch** wenigstens eine Abzugseinrichtung (7, 12) für ein Verpackungsmaterial, wobei eine erste Abzugseinrichtung (7) eine Doppelwalze (10) aufweist und eine zweite Abzugseinrichtung (12), eine Formschulter (12.1) und/oder eine Abzugsrolle (15) und/oder einen Transportriemen (30) aufweist.

7. Vorrichtung nach einem der vorangehenden Ansprüche, **dadurch gekennzeichnet, dass** Verpackungsmaterial, insbesondere eine Folie (9), von einer Folienrolle (8) mittels der ersten Abzugseinrichtung (7) abziehbar ist.

8. Vorrichtung nach einem der vorangehenden Ansprüche, **dadurch gekennzeichnet, dass** die Folie (9) mittels der zweiten Abzugseinrichtung (12) in einen Folienschlauch mit insbesondere rechteckiger und/oder runder Querschnittsform formbar ist.

9. Vorrichtung nach einem der vorangehenden Ansprüche, **gekennzeichnet durch** ein sich an eine Formschulter anschließendes äußeres Formelement (13), insbesondere aufweisend zwei einander gegenüberliegende seitliche Transportbänder (16.1, 16.2), einen Abzugsriemen und/oder eine Einfädelplatte (13.1).

10. Vorrichtung nach einem der vorangehenden Ansprüche, **gekennzeichnet durch** eine der wenigstens einen Abzugsrichtung (C) zugeordneten Längssiegeleinrichtung (14) zur Siegelung der Längsnaht des Schlauchbeutels.

11. Vorrichtung nach einem der vorangehenden Ansprüche, **gekennzeichnet durch** wenigstens eine der Längssiegeleinheit (14) nachgeordnete Seitenfalteinrichtung (18) zur Erzeugung von wenigstens einer Falte in wenigstens einen der Seiten des Folienschlauchs.

12. Vorrichtung nach einem der vorangehenden Ansprüche, **gekennzeichnet durch** eine Quersiegeleinheit (19) zur Erzeugung wenigstens einer Quernaht.

13. Verfahren zum Verpacken von stückigen Produkten, wie Keksen, in durch Folie gebildeten Schlauchbeuteln, wobei die Produkte (3) horizontal zugeführt werden, wobei zunächst wenigstens zwei Produkte (3) von einer Stapeleinheit (4) aufeinander gestapelt werden, die Produkte (3) gestapelt einem Füllbereich (E) zugeführt werden, die Produkte (3) durch eine Umlenkeinheit (1.2) mit einer Stapelkette (25.3) geführt von einer horizontalen Zuführrichtung in eine vertikale Einfüllrichtung (3) umgelenkt werden, die Produkte (3) in der Umlenkeinheit (1.2) in Halterungen (6, 24) gehalten werden, die Produkte beim Führen von der Horizontalen in die Vertikale durch wenigstens eine Haltestange am Herausfallen aus den Halterungen gehindert werden, und die Produkte (3) mittels zwei seitlich des Füllbereiches (3) angeordneter Transportbänder (16.1, 16.2) aufgenommen und mit der Geschwindigkeit der Schlauchbeutel bildenden Folie (9) gefördert werden.

14. Verfahren nach Anspruch 11, **dadurch gekennzeichnet, dass** die Produkte (3) mittels eines Produktportionierers in aus einer Mehrzahl von Einzelprodukten gebildeten Produkteinheiten separiert werden, wobei die Produkteinheiten mittels von Endlosbändern geführten Portionierfingern, die jeweils eine Produkteinheit aus mehreren Produkten aufnehmen, separiert werden.

15. Verfahren nach einem der Ansprüche 11 bis 13, **dadurch gekennzeichnet, dass** die Produkte zum Verteilen in ihrer Ausrichtung umgelenkt werden, vorzugsweise um 90°.

16. Verfahren nach einem der Ansprüche 11 bis 14, **dadurch gekennzeichnet, dass** die Produkte aus Halterungen (Bechern) einer zu fördernden Förderkette mittels an den Produkten angreifenden Übergabefingern an eine weiterführende Förderkette übergeben werden, wobei insbesondere die Übergabefinger mittels einer Nockensteuerung gesteuert werden..

17. Verfahren nach einem der Ansprüche 11 bis 15, **dadurch gekennzeichnet, dass** der Verpackungsschlauch maschinenseitig lediglich von seiner Außenseite gehalten, unterstützt und/oder geführt wird.

## Claims

1. Device for packaging discrete products, such as biscuits, in tubular bags formed by a film, wherein the products (3) are horizontally fed, having a stacking unit (4) by way of which at least two products (3) are initially stackable on top of one another and feedable in a stacked manner to a filling region (E), having a deflection unit (1.2) with a stacking chain (25.3) for deflecting the products (3) in a guided manner as a stack from the horizontal feeding direction into a vertical filling direction (3), having holders (6, 24) for holding the products (3) in the deflection unit (1.2), having at least one holding bar (25) for preventing the products (3) from falling out of the holders (6, 24) when said products are being guided from the horizontal into the vertical, and having two conveyor belts (16. 1, 16.2) which are disposed so as to be lateral to the filling region (E), for receiving and conveying the products (3) at the speed of the film (9) forming the tubular bags.

2. Device according to Claim 1, **characterized by** a product-portioning feature (27) for separating product units formed by a plurality of products (3).

3. Device according to Claim 2, **characterized in that** the product-portioning feature (27) includes portioning fingers (27.41 - 27.61) which are guided on endless belts (27.4 - 27.6), for receiving in each case one product unit of a plurality of products (3).

4. Device according to one of the preceding claims, **characterized in that** the stacking chain (24.3) of the stacking unit (4) has outwardly configured U-shaped holders (6, 24), wherein the products (3) are guidable from a depositing belt (24.1) into the holders by means of depositing wedges (24.5).

5. Device according to one of Claims 1 to 4, **characterized by** a transfer installation (26) having transfer fingers (26.4) which grip the products for raising (cycling) said products from cups or holders (25.3) of a stacking chain (25.1) and for transferring said products to a further conveyor (27), wherein the transfer installation in particular includes a cam guide (26.7) for the stacking fingers.

6. Device according to one of the preceding claims, **characterized by** at least one drawing-off installation (7, 12) for a packaging material, wherein a first drawing-off installation (7) includes a double roller (10) and a second drawing-off installation (12) includes a shaping shoulder (12.1) and/or a drawing-off roller (15) and/or a conveying tape (30).

7. Device according to one of the preceding claims, **characterized in that** the packaging material, in particular a film (9), is capable of being drawn off from a film roll (8) by means of the first drawing-off installation (7).

8. Device according to one of the preceding claims, **characterized in that** the film (9) is capable of being shaped into a tubular film having, in particular, a rectangular and/or round cross-sectional shape by means of the second drawing-off installation (12).

9. Device according to one of the preceding claims, **characterized by** an external shaping element (13) which is adjacent to a shaping shoulder and which, in particular, includes two mutually opposite, lateral conveyor belts (16.1, 16.2), one drawing-off tape and/or one threading plate (13.1).

10. Device according to one of the preceding claims, **characterized by** a longitudinal sealing installation (14) which is assigned to the at least one drawing-off direction (C), for sealing the longitudinal seam of the tubular bag.

11. Device according to one of the preceding claims, **characterized by** at least one side folding installation (18) which is disposed downstream of the longitudinal sealing installation (14), for producing at least one fold in at least one of the sides of the tubular film.

12. Device according to one of the preceding claims, **characterized by** a transverse sealing unit (19) for producing at least one transverse seam.

13. Method for packaging discrete products, such as biscuits, in tubular bags formed by a film, wherein the products (3) are horizontally fed, wherein firstly at least two products (3) are stacked on top of one another by a stacking unit (4), the products (3) are fed in a stacked manner to a filling region (E), the products (3) are deflected in a guided manner by a deflection unit (1.2) with a stacking chain (25.3) from a horizontal feeding direction into a vertical filling direction (3), the products (3) are held in the deflection unit (1.2) in holders (6, 24), the products when being guided from the horizontal into the vertical are prevented from falling out of the holders by at least one holding bar, and the products (3) are received by means of two conveyor belts (16.1, 16.2) which are disposed so as to be lateral to the filling region (3) and are conveyed at the speed of the film (9) forming the tubular bags.

14. Method according to Claim 11, **characterized in that** the products (3) are separated by means of a product-portioning feature into product units formed by a plurality of individual products, wherein the product units are separated by means of portioning fingers which are guided by endless belts and which in each case receive one product unit of a plurality of products.

15. Method according to one of Claims 11 to 13, **characterized in that** for distribution the products are deflected in their orientation, preferably by 90°.

16. Method according to one of Claims 11 to 14, **characterized in that** the products are transferred from holders (cups) of a conveying chain to be conveyed to an onward conveying chain by means of transfer fingers which grip on the products, wherein in particular the transfer fingers are controlled by means of a cam control.

17. Method according to one of Claims 11 to 15, **characterized in that** the tubular packaging is held, supported, and/or guided on the machine side merely from its outer side.

## Revendications

1. Dispositif destiné à l'emballage de produits en pièces, tels que des biscuits, dans des sachets tubulaires formés à l'aide d'un film, les produits (3) étant amenés de façon horizontale, avec une unité d'empilement (4) à l'aide de laquelle au moins deux produits (3) peuvent d'abord être empilés l'un sur l'autre puis peuvent être amenés vers une zone de remplissage (E), avec une unité de déviation (1.2) équipée d'une chaîne d'empilement (25.3) afin de dévier de façon guidée les produits (3) sous forme de pile de la direction d'amenée horizontale dans une direction de remplissage verticale (3), avec des supports (6, 24) pour maintenir les produits (3) dans l'unité de déviation (1.2), avec au moins une barre de maintien (25) pour empêcher une chute des produits (3) hors des supports (6, 24) en même temps que ceux-ci sont guidés de l'horizontale vers la verticale et avec deux tapis de transport (16.1, 16.2) disposés en côté de la zone de remplissage (E) pour recevoir et transporter les produits (3) à la vitesse du film (9) formant un sachet tubulaire.

2. Dispositif selon la revendication 1, **caractérisé par** présence d'un portionneur de biscuits (27) permettant de séparer les unités de produits formées à partir d'une pluralité de produits (3).

3. Dispositif selon la revendication 2, **caractérisé en ce que** le portionneur de biscuits (27) comporte des doigts de portionnement (27.41 - 27.61) guidés au niveau de tapis sans fin (27.4 - 27.6) pour recevoir respectivement une unité de produits composée de plusieurs produits (3).

4. Dispositif selon l'une quelconque des revendications précédentes, **caractérisé en ce que** la chaîne d'empilement (24.3) de l'unité d'empilement (4) possède des supports (6, 24) en forme d'U réalisés vers l'extérieur, les produits (3) pouvant être guidés d'un tapis de dépôt (24.1) dans les supports à l'aide de clavettes de placement (24.5).

5. Dispositif selon l'une quelconque des revendications 1 à 4, **caractérisé par** la présence d'un dispositif de transfert (26) avec des doigts de transfert (26.4) s'engrenant au niveau des produits pour les soulever (sortir en rythme) hors des gobelets ou des supports (25.3) d'une chaîne d'empilement (25.1) et pour les transférer à un tapis de transport (27) supplémentaire, le dispositif de transfert comportant notamment un guide-came (26.7) pour les doigts d'empilement.

6. Dispositif selon l'une quelconque des revendications précédentes, **caractérisé par** au moins un dispositif de retrait (7, 12) d'une matière de conditionnement, un premier dispositif de retrait (7) comportant un double rouleau (10) et un deuxième dispositif de retrait (12) comportant un épaulement de forme (12.1) et/ou un rouleau de retrait (15) et/ou une courroie de transport (30).

7. Dispositif selon l'une quelconque des revendications précédentes, **caractérisé en ce que** la matière de conditionnement, notamment un film (9), peut être tirée d'un rouleau de film (8) à l'aide du premier dispositif de retrait (7).

8. Dispositif selon l'une quelconque des revendications précédentes, **caractérisé en ce que** le film (9) peut être formé en un tube de film prenant notamment une forme de section transversale rectangulaire et/ou ronde à l'aide du deuxième dispositif de retrait (12).

9. Dispositif selon l'une quelconque des revendications précédentes, **caractérisé par** la présence d'un élément de forme (13) extérieur se connectant à un épaulement de forme, comportant notamment deux tapis de transport (16.1, 16.2) latéraux opposés l'un par rapport à l'autre, une courroie de retrait et/ou une plaque d'enfilage (13.1).

10. Dispositif selon l'une quelconque des revendications précédentes, **caractérisé par** la présence d'un dispositif de scellement longitudinal (14) associé à au moins une direction de retrait (C) pour le scellement du joint longitudinal du sachet tubulaire.

11. Dispositif selon l'une quelconque des revendications précédentes, **caractérisé par** la présence d'au moins un dispositif de pliage latéral (18) placé en aval de l'unité de scellement longitudinal (14) pour réaliser au moins un pli au moins un des côtés du tube de film.

12. Dispositif selon l'une quelconque des revendications précédentes, **caractérisé par** la présence d'une unité de scellement transversal (19) pour réaliser au moins un joint transversal.

13. Procédé destiné à l'emballage de produits en pièces, tels que des biscuits, dans des sachets tubulaires formés à l'aide d'un film, les produits (3) étant amenés de façon horizontale, en premier lieu au moins deux produits (3) étant empilés l'un sur l'autre par une unité d'empilement (4), les produits (3) étant amenés en pile dans une zone de remplissage (E), les produits (3) étant déviés par guidage par une unité de déviation (1.2) équipée d'une chaîne d'empilement (25.3) d'une direction d'amenée horizontale dans une direction de remplissage verticale (3), les produits (3) étant maintenus dans les supports (6, 24) dans l'unité de déviation (1.2), les produits étant entravés lors du guidage de l'horizontale dans la verticale par au moins une barre de maintien lors de la chute hors des supports et les produits (3) étant reçus à l'aide de deux tapis de transport (16.1, 16.2) disposés en côté de la zone de remplissage (3) et transportés à la vitesse du film (9) formant le sachet tubulaire.

14. Procédé selon la revendication 11, **caractérisé en ce que** les produits (3) sont séparés en unités de produits formées d'une pluralité de produits individuels à l'aide d'un portionneur de biscuits, les unités de produits étant séparées à l'aide de doigts de portionnement guidés par des tapis sans fin et recevant respectivement une unité de produits composée de plusieurs produits.

15. Procédé selon l'une quelconque des revendications 11 à 13, **caractérisé en ce que** les produits sont déviés pour être répartis dans leur alignement, de préférence de 90°.

16. Procédé selon l'une quelconque des revendications 11 à 14, **caractérisé en ce que** les produits sont transférés hors des supports (gobelets) d'une chaîne de transport à transporter à l'aide de doigts de transfert s'engrenant au niveau de produits, au niveau d'une chaîne de transport se poursuivant, les doigts de transfert étant notamment commandés à l'aide d'un élément de commande de came.

17. Procédé selon l'une quelconque des revendications 11 à 15, **caractérisé en ce que** le tuyau de conditionnement n'est maintenu, soutenu et/ou guidé du côté machine que depuis son côté extérieur.
